# EUROPEAN PATENT APPLICATION

(11) **EP 4 625 269 A1**
(43) Date of publication of application: **01.10.2025**
(21) Application number: 23902522.4
(22) Date of filing: 01.12.2023
(51) Int. Cl.: G06N 10/60, G06N 10/20, G06N 5/00

(54) **QUANTUM COMPUTING METHOD AND APPARATUS**

(30) Priority: 13.12.2022 CN 202211600214
(71) Applicant: Huawei Technologies Co., Ltd., Shenzhen, Guangdong 518129 (CN)
(72) Inventor: LIU, Wuxin, Shenzhen, Guangdong 518129 (CN); XU, Xusheng, Shenzhen, Guangdong 518129 (CN); ZHANG, Kai, Shenzhen, Guangdong 518129 (CN); YUNG, Manhong, Shenzhen, Guangdong 518129 (CN)
(74) Representative: Pfenning, Meinig & Partner mbB
(86) International application number: PCT/CN2023/135883
(87) International publication number: WO 2024/125325

(57) **Abstract**

This application provides a quantum computing method and apparatus. The method is applied to a first electronic device, and the method includes: splitting a first quantum circuit to obtain n second quantum circuits; sending the n second quantum circuits to a second electronic device; and receiving a running result sent by the second electronic device, where the running result indicates a result obtained by running the n second quantum circuits. The solutions provided in this application can simplify an operation process of repeated compilation, and can return running results in multiple directions during one time of running. **In** this way, a user does not need to repeatedly deliver quantum circuits for performing expectation measurements in different directions.

## Description

This application claims priority to Chinese Patent Application No. 202211600214.3, filed with the China National Intellectual Property Administration on December 13, 2022, and entitled "QUANTUM COMPUTING METHOD AND APPARATUS", which is incorporated herein by reference in its entirety.

### TECHNICAL FIELD

Embodiments of this application relate to the quantum field, and in particular, to a quantum computing method and apparatus.

### BACKGROUND

Quantum computing is a new computing manner that uses quantum properties such as quantum superposition and quantum entanglement.

Currently, a quantum computing manner is as follows: At the bottom of an interface, there is a quantum circuit writer containing a symbol representing a quantum operation and a linear element representing a quantum bit. A user may place the symbol representing a quantum operation on a corresponding quantum bit by performing a drag-and-drop operation, and then a quantum circuit may be translated into a scripting language (which may be understood as a computer language for performing an operation on a quantum). Alternatively, a user command provided through a command line interface may be converted into a quantum circuit, the quantum circuit may be translated into a scripting language, and a graphical representation is dynamically generated. However, in this manner, a quantum element representing a quantum operation provides only a probability measurement in a single direction (usually a Z direction).

Another quantum computing manner is as follows: Two quantum circuits are obtained, then a first quantum circuit is first compiled and run, and then a second quantum circuit is dynamically compiled and run based on a running result of the first quantum circuit. The two quantum circuits may be run on different hardware. However, in this manner, a single parameterized quantum circuit is converted into multiple quantum circuits for running, and the quantum circuit needs to be repeatedly compiled and run, resulting in a complex operation. In addition, during running on the hardware, a probability result of a quantum state in a single direction (usually a Z direction) is returned. If a result in another direction needs to be obtained, a projection in an X direction or a Y direction needs to be rotated to the Z direction for a measurement.

### SUMMARY

Embodiments of this application provide a quantum computing method and apparatus, to simplify an operation process of repeated compilation, and return running results in multiple directions during one time of running. In this way, a user does not need to repeatedly deliver quantum circuits for performing expectation measurements in different directions.

According to a first aspect, a quantum computing method is provided. The method is applied to a first electronic device, and the method includes: splitting a first quantum circuit to obtain n second quantum circuits; sending the n second quantum circuits to a second electronic device; and receiving a running result sent by the second electronic device, where the running result indicates a result obtained by running the n second quantum circuits.

According to the solution provided in this embodiment of this application, the first electronic device may split the first quantum circuit, and send the n second quantum circuits obtained through splitting to the second electronic device, so that the second electronic device may run the n second quantum circuits. The first electronic device may receive the running result sent by the second electronic device, where the running result indicates the result obtained by running the n second quantum circuits. Compared with a solution, in the conventional technology, in which a quantum circuit is repeatedly compiled and run and only a measurement result in a single direction can be returned at a time, the solution provided in this embodiment of this application can simplify an operation process of repeated compilation, and can return running results in multiple directions during one time of running. In this way, a user does not need to repeatedly deliver quantum circuits for performing expectation measurements in different directions.

With reference to the first aspect, in some possible implementations, the first quantum circuit includes quantum measurements in n directions, and any one of the n second quantum circuits includes a quantum measurement in one of the n directions. Quantum measurements are in different directions in different second quantum circuits.

According to the solution provided in this embodiment of this application, the first quantum circuit includes the quantum measurements in the n directions. When splitting the first quantum circuit, the first electronic device may obtain the n second quantum circuits, and each second quantum circuit includes a quantum measurement in one direction. This can ensure accuracy of splitting the first quantum circuit, and help the second electronic device improve accuracy of n first running results obtained by running the n second quantum circuits by the second electronic device.

With reference to the first aspect, in some possible implementations, the splitting the first quantum circuit includes: splitting the first quantum circuit based on a measurement operator corresponding to the first quantum circuit.

According to the solution provided in this embodiment of this application, the first electronic device may split the first quantum circuit based on the measurement operator corresponding to the first quantum circuit. This can improve accuracy of splitting the first quantum circuit, and further can improve accuracy of n first running results obtained through each time of updating the second electronic device runs the n second quantum circuits.

With reference to the first aspect, in some possible implementations, the first quantum circuit corresponds to M measurement operators, and the splitting the first quantum circuit based on the measurement operator corresponding to the first quantum circuit includes: for a j^{th} measurement operator, adding the j^{th} measurement operator to a measurement operator set, where j is any value less than or equal to M; for a k^{th} measurement operator, determining whether there is a measurement operator that has a same quantum bit as and a different direction from the k^{th} measurement operator in the measurement operator set, where k traverses 1 to M and k≠j; and combining the k^{th} measurement operator with an existing measurement operator in the measurement operator set based on a determining result, or adding the k^{th} measurement operator to the measurement operator set.

According to the solution provided in this embodiment of this application, for the j^{th} measurement operator, the first electronic device may add the j^{th} measurement operator to the measurement operator set; and for the k^{th} measurement operator, the first electronic device may determine whether there is a measurement operator that has a same quantum bit as and a different direction from the k^{th} measurement operator in the measurement operator set, and perform a further operation based on the determining result, to split the first quantum circuit. According to the method, a smallest quantity of second quantum circuits are obtained by splitting the first quantum circuit. Therefore, it can be ensured that the second electronic device runs a smallest quantity of second quantum circuits, thereby reducing a running time and improving efficiency.

With reference to the first aspect, in some possible implementations, the combining the k^{th} measurement operator with the existing measurement operator in the measurement operator set based on the determining result, or adding the k^{th} measurement operator to the measurement operator set includes: if there is a measurement operator that has a same quantum bit as and a different direction from the k^{th} measurement operator in the measurement operator set, adding the k^{th} measurement operator to the measurement operator set; or if there is no measurement operator that has a same quantum bit as and/or a different direction from the k^{th} measurement operator in the measurement operator set, combining the k^{th} measurement operator with the existing measurement operator in the measurement operator set.

According to the solution provided in this embodiment of this application, if there is a measurement operator that has a same quantum bit as and a different direction from the k^{th} measurement operator in the measurement operator set, the first electronic device may add the k^{th} measurement operator to the measurement operator set; or if there is no measurement operator that has a same quantum bit as and/or a different direction from the k^{th} measurement operator in the measurement operator set, the first electronic device may combine the k^{th} measurement operator with the existing measurement operator in the measurement operator set, to split the first quantum circuit. According to the method, a smallest quantity of second quantum circuits are obtained by splitting the first quantum circuit. Therefore, it can be ensured that the second electronic device runs a smallest quantity of second quantum circuits, thereby reducing a running time and improving efficiency.

With reference to the first aspect, in some possible implementations, the first quantum circuit includes a quantum operation including a first parameter, and a specific value of the first parameter is variable.

According to the solution provided in this embodiment of this application, the first quantum circuit may include the quantum operation including the first parameter, and the specific value of the first parameter is variable. In the conventional technology, a parameter needs to be specified as a specific value when a quantum circuit is constructed. Consequently, the constructed quantum circuit is a fixed circuit. Therefore, according to the method provided in this application, different quantum circuits can be obtained by changing a specific value of the parameter, thereby improving flexibility and diversity.

With reference to the first aspect, in some possible implementations, the quantum operation including the first parameter includes multiple quantum operations, the first quantum circuit further includes a quantum operation including a second parameter, the quantum operation including the second parameter is obtained by using a combined operation gate, and the combined operation gate is a combined gate including the multiple quantum operations.

According to the solution provided in this embodiment of this application, the first quantum circuit may further include the quantum operation including the second parameter, that is, the first quantum circuit may include the quantum operation including the first parameter and the quantum operation including the second parameter, and the quantum operation including the second parameter is obtained by using the combined operation gate. The quantum operation including the second parameter in the first quantum circuit is obtained by using the combined operation gate. Therefore, compared with a solution, in the conventional technology, in which the user needs to separately drag each quantum operation to the quantum circuit, the solution provided in this embodiment of this application can simplify an operation performed by the user.

With reference to the first aspect, in some possible implementations, the running result includes the n first running results or a first combined result determined based on the n first running results, and the n first running results are results obtained by running the n second quantum circuits by the second electronic device.

With reference to the first aspect, in some possible implementations, the running result includes the n first running results, and the method further includes: determining the first combined result based on the n first running results and a coefficient of the measurement operator corresponding to the first quantum circuit.

According to the solution provided in this embodiment of this application, if the running result includes the n first running results, the first electronic device may determine the first combined result based on the n first running results and the coefficient of the measurement operator corresponding to the first quantum circuit. Different first combined results may be obtained by setting different coefficients, thereby improving flexibility of quantum computing.

With reference to the first aspect, in some possible implementations, the method further includes: receiving an operation of updating the first parameter for a w^{th} time by the user, and sending, to the second electronic device, a second quantum circuit of which the first parameter is updated, where a value of w starts from 1; receiving a running result that is sent by the second electronic device and that is obtained through a (w+1)^{th} time of running, where the running result obtained through the (w+1)^{th} time of running includes n (w+1)^{th} running results or a (w+1)^{th} combined result, and the (w+1)^{th} combined result is obtained based on the n (w+1)^{th} running results; determining whether the (w+1)^{th} combined result converges; and displaying a target result and a target parameter when the (w+1)^{th} combined result converges, where the target result is a combined result with a smallest value in combined results, and the target parameter is a parameter corresponding to the combined result with the smallest value.

According to the solution provided in this embodiment of this application, the user may update the first parameter for multiple times, and the first electronic device may send, to the second electronic device, the second quantum circuit obtained through the w^{th} time of updating, and receive the running result that is sent by the second electronic device and that is obtained through the (w+1)^{th} time of running. After receiving the running result obtained through the (w+1)^{th} time of running, the first electronic device may determine whether the (w+1)^{th} combined result (the (w+1)^{th} combined result is obtained based on the n (w+1)^{th} running results) converges, and display the target result and the target parameter when the (w+1)^{th} combined result converges. Because the user may update the first parameter in the first quantum circuit for multiple times, the second electronic device may separately run a second quantum circuit obtained through each time of updating, and send a running result to the first electronic device. After receiving the running result each time, the first electronic device may determine whether a combined result (the combined result may be the running result or may be a result obtained based on the running result) converges, and display the target result and the target parameter when the combined result converges. In other words, according to the solution provided in this embodiment of this application, computing may be performed by using an iterative running method. Compared with the conventional technology in which the iterative running method cannot be used because the constructed circuit is a fixed circuit, the solution provided in this embodiment of this application can optimize a parameter of the quantum circuit to achieve an optimal measurement result.

With reference to the first aspect, in some possible implementations, the method further includes: displaying the n second quantum circuits in response to a first operation performed by the user.

According to the solution provided in this embodiment of this application, in response to the first operation performed by the user, the first electronic device may display the n second quantum circuits, to present a specific adaptation made by the second electronic device to run a variational quantum algorithm, so that the user can intuitively view underlying running logic, thereby improving perception of quantum hardware.

According to a second aspect, a quantum computing method is provided. The method is applied to a second electronic device, and the method includes: receiving n second quantum circuits sent by a first electronic device, where the n quantum circuits are quantum circuits obtained by splitting a first quantum circuit; running the n second quantum circuits to obtain n first running results; and sending a running result to the first electronic device, where the running result indicates a result obtained by running the n second quantum circuits.

According to the solution provided in this embodiment of this application, the second electronic device may receive the n second quantum circuits sent by the first electronic device, and run the n second quantum circuits to obtain the n first running results. Compared with a solution, in the conventional technology, in which a quantum circuit is repeatedly compiled and run and only a measurement result in a single direction can be returned at a time, the solution provided in this embodiment of this application can simplify an operation process of repeated compilation, and can return running results in multiple directions during one time of running. In this way, a user does not need to repeatedly deliver quantum circuits for performing expectation measurements in different directions.

With reference to the second aspect, in some possible implementations, the first quantum circuit includes quantum measurements in n directions, and the second quantum circuit includes a quantum measurement in one direction.

According to the solution provided in this embodiment of this application, the first quantum circuit includes the quantum measurements in the n directions. When splitting the first quantum circuit, the first electronic device may obtain the n second quantum circuits, and each second quantum circuit includes a quantum measurement in one direction. This helps improve accuracy of splitting the first quantum circuit by the first electronic device, and therefore can improve accuracy of the n first running results obtained by running the n second quantum circuits by the second electronic device.

With reference to the second aspect, in some possible implementations, the first quantum circuit includes a quantum operation including a first parameter, and a specific value of the first parameter is variable.

According to the solution provided in this embodiment of this application, the first quantum circuit may include the quantum operation including the first parameter, and the specific value of the first parameter is variable. In the conventional technology, a parameter needs to be specified as a specific value when a quantum circuit is constructed. Consequently, the constructed quantum circuit is a fixed circuit. Therefore, according to the method provided in this application, different quantum circuits can be obtained by changing a specific value of the parameter, thereby improving flexibility and diversity.

With reference to the second aspect, in some possible implementations, the quantum operation including the first parameter includes multiple quantum operations, the first quantum circuit further includes a quantum operation including a second parameter, the quantum operation including the second parameter is obtained by using a combined operation gate, and the combined operation gate is a combined gate including the multiple quantum operations.

According to the solution provided in this embodiment of this application, the first quantum circuit may further include the quantum operation including the second parameter, that is, the first quantum circuit may include the quantum operation including the first parameter and the quantum operation including the second parameter, and the quantum operation including the second parameter is obtained by using the combined operation gate. The quantum operation including the second parameter in the first quantum circuit is obtained by using the combined operation gate. Therefore, compared with a solution, in the conventional technology, in which the user needs to separately drag each quantum operation to the quantum circuit, the solution provided in this embodiment of this application can simplify an operation performed by the user.

With reference to the second aspect, in some possible implementations, the running result includes the n first running results or a first combined result, the n first running results are results obtained by running the n second quantum circuits by the second electronic device, and the first combined result is obtained based on the n first running results.

With reference to the second aspect, in some possible implementations, if the running result includes the first combined result, the first combined result is determined based on the n first running results and a coefficient of a measurement operator corresponding to the first quantum circuit.

According to the solution provided in this embodiment of this application, if the running result includes the first combined result, the first combined result may be determined based on the n first running results and the coefficient of the measurement operator corresponding to the first quantum circuit. Different first combined results may be obtained by setting different coefficients, thereby improving flexibility of quantum computing.

With reference to the second aspect, in some possible implementations, the method further includes: receiving a second quantum circuit that is obtained by updating the first parameter for a w^{th} time and that is sent by the first electronic devices, where a value of w starts from 1; running the second quantum circuit of which the first parameter is updated for the w^{th} time, to obtain n (w+1)^{th} running results; and sending a running result obtained through a (w+1)^{th} time of running to the first electronic device, where the running result obtained through the (w+1)^{th} time of running includes the n (w+1)^{th} running results or a (w+1)^{th} combined result, and the (w+1)^{th} combined result is obtained based on the n (w+1)^{th} running results.

According to the solution provided in this embodiment of this application, the second electronic device may receive the second quantum circuit that is obtained through the w^{th} time of updating and that is sent by the first electronic device, run, for the w^{th} time, the second quantum circuit of which the first parameter is updated, to obtain the n (w+1)^{th} running results, and then send, to the first electronic device, the running result obtained through the (w+1)^{th} time of running, so that the first electronic device may determine, based on the received running result obtained through the (w+1)^{th} time of running by the second electronic device, whether the (w+1)^{th} combined result converges, and displays a target result and a target parameter when the (w+1)^{th} combined result converges. Because the user may update the first parameter in the first quantum circuit for multiple times, the second electronic device may separately run a second quantum circuit obtained through each time of updating, and send a running result to the first electronic device. After receiving the running result each time, the first electronic device may determine whether a combined result (the combined result may be the running result or may be a result obtained based on the running result) converges, and display the target result and the target parameter when the combined result converges. In other words, according to the solution provided in this embodiment of this application, computing may be performed by using an iterative running method. Compared with the conventional technology in which the iterative running method cannot be used because the constructed circuit is a fixed circuit, the solution provided in this embodiment of this application can optimize a parameter of the quantum circuit to achieve an optimal measurement result.

According to a third aspect, an apparatus is provided. The apparatus includes a corresponding module or unit for performing the method in any possible implementation of the first aspect or the second aspect.

According to a fourth aspect, an apparatus is provided, including one or more processors, a memory, one or more application programs, and one or more computer programs. The one or more computer programs are stored in the memory. The one or more computer programs include instructions. When the instructions are executed by the apparatus, the apparatus is caused to perform the method in any possible implementation of the first aspect or the second aspect.

According to a fifth aspect, a chip system is provided, including at least one processor. When program instructions are executed in the at least one processor, a function of the method in any possible implementation of the first aspect or the second aspect is implemented on an electronic device.

According to a sixth aspect, a computer storage medium is provided, including computer instructions. When the computer instructions are run on an electronic device, the electronic device is caused to perform the method in any possible implementation of the first aspect or the second aspect.

According to a seventh aspect, a computer program product is provided. When the computer program product is run on an electronic device, the electronic device is caused to perform the method in any possible design of the first aspect or the second aspect.

### BRIEF DESCRIPTION OF DRAWINGS

FIG. 1 is a diagram of a model to which this application may be applied;
FIG. 2 is a diagram of a GUI according to an embodiment of this application;
FIG. 3 is a diagram of a quantum circuit according to an embodiment of this application;
FIG. 4(a), FIG. 4(b), FIG. 4(c), FIG. 4(d), FIG. 4(e), FIG. 4(f), FIG. 4(g), FIG. 4(h), FIG. 4(i), FIG. 4(j), FIG. 4(k), and FIG. 4(l) are diagrams of another GUI according to an embodiment of this application;
FIG. 5 is a diagram of a quantum computing method according to an embodiment of this application;
FIG. 6 is a diagram of a method for adding a quantum measurement to a quantum bit according to an embodiment of this application;
FIG. 7 is a diagram of a parameterized quantum circuit according to an embodiment of this application;
FIG. 8 is a diagram of a method for computing a measurement operator set according to an embodiment of this application;
FIG. 9 is a diagram of two actual circuits that are run on hardware and that are obtained by decomposing the quantum circuit in FIG. 7d according to an embodiment of this application;
FIG. 10 is a diagram of another parameterized quantum circuit according to an embodiment of this application;
FIG. 11 is a diagram of two actual circuits that are run on hardware and that are obtained by decomposing the quantum circuit in FIG. 10 according to an embodiment of this application;
FIG. 12 is a diagram of a quantum computing method according to an embodiment of this application;
FIG. 13 is a block diagram of a quantum computing apparatus according to an embodiment of this application; and
FIG. 14 is a block diagram of another quantum computing apparatus according to an embodiment of this application.

### DESCRIPTION OF EMBODIMENTS

The following describes technical solutions in embodiments of this application with reference to accompanying drawings.

The technical solutions in embodiments of this application may be applied to various computer devices. The computer device may be a terminal device, for example, a mobile phone (mobile phone), a tablet computer (Pad), or a computer with a wireless transceiver function, or may be a wireless terminal used in virtual reality (virtual reality, VR), augmented reality (augmented reality, AR), industrial control (industrial control), self-driving (self-driving), remote medical (remote medical), a smart grid (smart grid), transportation safety (transportation safety), a smart city (smart city), a smart home (smart home), and another scenario. In this application, the terminal device and a chip that can be used in the terminal device are collectively referred to as a terminal device. It should be understood that a specific technology and a specific device form used for the terminal device are not limited in embodiments of this application.

The computer device may alternatively be a network device, for example, a server in a data center, a home base station, an access point (access point, AP) in a wireless fidelity (wireless fidelity, Wi-Fi) system, a wireless relay node, a wireless backhaul node, a transmission point (transmission point, TP), or a transmission and reception point (transmission and reception point, TRP), or may be a component or a part of a device that constitutes a base station, for example, a central unit (central unit, CU), a distributed unit (distributed unit, DU), or a baseband unit (baseband unit, BBU). It should be understood that a specific technology and a specific device form used for the network device are not limited in embodiments of this application. In this application, the network device may be the network device, or may be a chip used in the network device to complete a wireless communication processing function.

It should be understood that in embodiments of this application, the terminal device or the network device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). An operating system may be any one or more computer operating systems that implement service processing through a process (process), for example, a Linux operating system, a Unix operating system, an Android operating system, an iOS operating system, or a Windows operating system. The application layer includes applications such as a browser, a contacts application, text processing software, and instant messaging software.

In addition, aspects or features of this application may be implemented as a method, an apparatus, or a product that uses standard programming and/or engineering technologies. The term "product" used in this application covers a computer program that can be accessed from any computer-readable device, carrier, or medium. For example, the computer-readable storage medium may include but is not limited to a magnetic storage device (for example, a hard disk drive, a floppy disk, or a magnetic tape), an optical disc (for example, a compact disc (compact disc, CD) or a digital versatile disc (digital versatile disc, DVD)), a smart card, and a flash memory (for example, an erasable programmable read-only memory (erasable programmable read-only memory, EPROM), a card, a stick, or a key drive).

In addition, various storage media described in this specification may represent one or more devices and/or other machine-readable media that are configured to store information. The term "machine-readable storage media" may include but is not limited to a radio channel, and various other media that can store, include, and/or carry instructions and/or data.

It should be understood that division into manners, cases, categories, and embodiments in embodiments of this application is merely for ease of description, and should not constitute a special limitation. Features in various manners, categories, cases, and embodiments may be combined without contradiction.

It should be further understood that "first", "second", and "third" in embodiments of this application are merely for distinguishing, and should not constitute any limitation on this application. For example, "first information" and "second information" in embodiments of this application represent information transmitted between a network device and a terminal device.

It should be further understood that in embodiments of this application, sequence numbers of the processes do not mean execution sequences. The execution sequences of the processes should be determined based on functions and internal logic of the processes, and should not constitute any limitation on the implementation processes of embodiments of this application.

It should be further noted that in embodiments of this application, "predefinition" and the like may be implemented by prestoring corresponding code or a table in a device (for example, including the terminal device and the network device) or in another manner that can be used to indicate related information. A specific implementation thereof, for example, a preset rule or a preset constant in embodiments of this application, is not limited in this application.

It should be further noted that the term "and/or" describes an association relationship between associated objects, and represents that three relationships may exist. For example, A and/or B may represent the following three cases: Only A exists, both A and B exist, and only B exists. The character "/" usually indicates an "or" relationship between associated objects.

For ease of understanding the solutions in this application, the following first briefly describes a background technology related to this application.

Quantum computing is a new computing manner that uses quantum properties such as quantum superposition and quantum entanglement. Similar to a conventional transistor-based gate circuit computer, a quantum circuit including a quantum gate may also be used to implement quantum computing. A quantum algorithm is constructed by using a specific quantum circuit. Common classical quantum algorithms include a prime factorization algorithm proposed by Shor, a database search algorithm proposed by Grover, a Harrow-Hassidim-Lloyd (Harrow-Hassidim-Lloyd, HHL) algorithm for solving a system of linear equations, and the like. A common feature of these quantum algorithms is that the specific quantum circuit is used, a result may be obtained through one time of running, and an entire process requires no participation of classical computing. However, currently, there is no true general-purpose quantum computer on hardware. Consequently, these quantum algorithms have very limited applications.

The development of quantum computing may be described by noisy intermediate-scale quantum computing (noisy intermediate-scale quantum computing, NISQ). To fully use a computing capability of existing quantum hardware, some classical-quantum hybrid algorithms are proposed. A common feature of these algorithms is that an entire computing process may be assisted by a classical computer. A usual practice is that a quantum computer runs a specific quantum circuit to obtain an operation result, and then the classical computer performs iteration based on a current computing result, to determine a next quantum circuit that needs to be run. After this is repeated for multiple times, a result of the quantum computer converges, and a final operation result is obtained. Therefore, a key of the classical-quantum hybrid algorithm is that the classical computer may participate in the entire operation process, indicating an optimization direction for the quantum computer. The quantum computer fully uses a computing speed advantage and quickly completes some computing results that are difficult for the classical computer to process. Common classical-quantum hybrid algorithms include a quantum approximate optimization algorithm (quantum approximate optimization algorithm, QAOA), a variational quantum eigensolver (variational quantum eigensolver, VQE), neural network training using a quantum circuit, and the like.

Common methods for constructing a quantum computer include a superconducting circuit, an ion trap, a Rydberg atom, a semiconductor quantum dot, and the like. However, these methods usually require extreme experimental conditions, for example, a low temperature of tens of millikelvins, strong laser, and high vacuum, and these extreme experimental conditions are not easy for ordinary users to obtain. Therefore, users expect that there can be some convenient manners to provide quantum hardware services, and cloud services emerge. The cloud service may be understood as follows: An interactive interface and a command line interface are provided on a web page. A user may write a quantum circuit in the two manners (the user may write the quantum circuit according to a preset rule, and the preset rule may be that there needs to be an operation of measuring a quantum bit), and then send the quantum circuit to a quantum computer at a server end. The quantum computer executes a code command of the user, and returns a result to the user. A complete result in a quantum computing process is usually quantum states of all quantum bits that participate in an operation. The quantum state may be represented by using a density matrix method. A single quantum bit is used as an example. In this case, a state of the single quantum bit may be represented as *ρ=*(*a b*;*b^{*}* 1-*a*), where *a* is a real number, *b* is a complex number, and *b*^{*} is a complex conjugate of *b.*

If hardware of the quantum computer is configured to execute the code command of the user, a result in a single direction is returned each time. Usually, a projection of the quantum state in a *Z* direction, that is, a probability of the quantum state in the *Z* direction, is returned. The quantum state *ρ* of the foregoing single bit is used as an example. In this case, a probability of being in a 0 state in the *Z* direction is *P*(*0*)*=a,* and a probability of being in a 1 state in the *Z* direction is *P*(1)*=*1*-a.* If a result in another direction (for example, an X direction or a Y direction) needs to be obtained, a projection in the X direction or the Y direction needs to be rotated to the *Z* direction for a measurement. An expectation measurement is another method that can be used to reflect a quantum computing result. For an expectation measurement operator H, the quantum computing result is *Tr*(*ρH*). The foregoing single bit is used as an example. In this case, when the expectation operator is a Pauli operator *Z* = [1 0;0 -1], an obtained expected value is *P*(0)-*P*(1)=2*a*-1, and is referred to as an expected value in the *Z* direction. Similarly, an expected value, that is, *b*+*b*^{*}, in the X direction may be obtained by using a Pauli operator *X* = [0 1;1 0] as the expectation measurement operator, and an expected value, that is, *b*-*b*^{*}, in the Y direction may be obtained by using a Pauli operator *Y* =[*0 -i*;*i* 0] as the expectation measurement operator. In addition, an expectation measurement operator in any direction may be obtained by decomposing the expectation operators in the X, Y, and *Z* directions.

If a simulator of the quantum computer is configured to execute the code command of the user, the simulator may directly obtain a density matrix representation of the quantum state. Therefore, expectation measurement results in multiple directions (including an X direction, a Y direction, and a *Z* direction) may be directly computed.

Currently, a quantum computing manner is as follows: There is a quantum circuit writer at a bottom of an interface, and there is a symbol representing a quantum operation and a linear element representing a quantum bit in the quantum circuit writer. A user may place the symbol representing a quantum operation on a corresponding quantum bit through a drag-and-drop operation, and then a quantum circuit may be translated into a scripting language (which may be understood as a computer language for performing an operation on a quantum). Alternatively, a user command provided through a command line interface may be converted into a quantum circuit, the quantum circuit may be translated into a scripting language, and a graphical representation is dynamically generated. However, in this manner, a quantum element representing a quantum operation provides only a probability measurement in a single direction (usually a *Z* direction).

Another quantum computing manner is as follows: Two quantum circuits are obtained, then a first quantum circuit is first compiled and run, and then a second quantum circuit is dynamically compiled and run based on a running result of the first quantum circuit. The two quantum circuits may be run on different hardware. However, in this manner, a single parameterized quantum circuit is converted into multiple quantum circuits for running, and the quantum circuit needs to be repeatedly compiled and run, resulting in a complex operation. In addition, during running on the hardware, a probability result of a quantum state in a single direction (usually a *Z* direction) is returned. If a result in another direction needs to be obtained, a projection in an X direction or a Y direction needs to be rotated to the *Z* direction for a measurement.

Therefore, this application provides a quantum computing method. For a quantum circuit that is run on hardware (the hardware is a quantum computer), the quantum circuit may be decomposed into actual quantum circuits for performing expectation measurements in multiple directions. The actual quantum circuits for performing expectation measurements in multiple directions may be independently run on the hardware, to obtain multiple running results. Finally, the multiple running results may be sent. This can simplify an operation process of repeated compilation, and can return running results in multiple directions during one time of running. In this way, a user does not need to repeatedly deliver quantum circuits for performing expectation measurements in different directions.

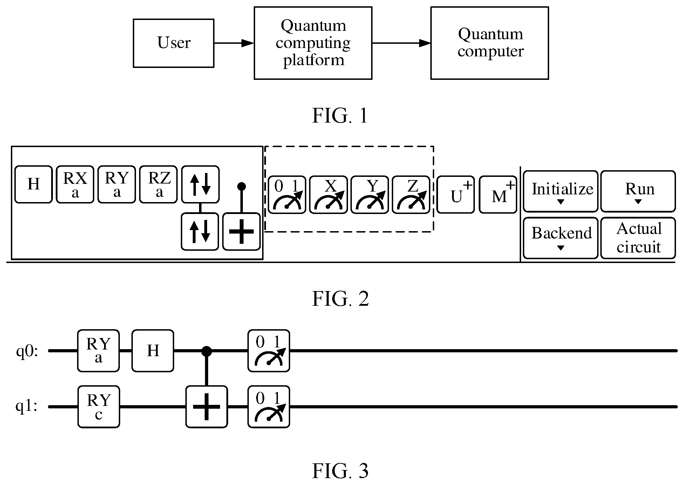

This application may be applied to a model shown in FIG. 1, and a user may control a quantum computer on hardware through a quantum computing platform. The quantum computing platform encapsulates some functions of the quantum computer and provides an interface to the user. The user may conveniently control the quantum computer through the quantum computing platform, and run various quantum algorithms and functions.

The quantum computing platform to which this application may be applied is usually implemented on a classical computer device, which may be a personal computer, a server in a data center, a portable personal mobile phone, or the like.

In this application, there may be a presentation similar to that shown in FIG. 2 in a user interface. In the figure, specific quantum operations are circled by using a black solid line. For example, 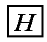 is a Hadamard gate, and may perform an operation on 1 quantum bit, and this gate may be represented by using a matrix $H = \frac{1}{\sqrt{2}} \left[1 1;1 -1\right]$; 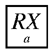 is a rotation operation gate around an X-axis, includes a parameter a, and may perform an operation on 1 quantum bit, and this gate may be represented by using the following matrix: *RX*(*a*)=[cos(*a*/2) -*i*sin(*a*/2);-*i*sin(*a*/2) cos(*a*/2)]; 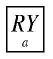 is a rotation operation gate around a Y-axis, includes a parameter a, and may perform an operation on 1 quantum bit, and this gate may be represented by using the following matrix: *Y* =[cos(*a*/2) - sin(*a*/2);-sin(*a*/2) cos(*a*/2)]; 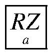 is a rotation operation gate around a Z-axis, includes a parameter a, and may perform an operation on 1 quantum bit, and this gate may be represented by using the following matrix: *Z* = [*e*^{-*i*(*a*/2)} 0;0 *e*^{*i*(*a*/2)}]; $\begin{matrix}↑ ↓ \\ ↑ ↓\end{matrix}$ is a swap gate, may perform an operation on 2 quantum bits, and may be represented by using a matrix 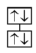 = [1 0 0 0; 0 0 1 0; 0 1 0 0; 0 0 0 1]; and 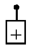 is a controlled NOT gate, may perform an operation on 2 quantum bits, and may be represented by using a matrix 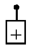 = [1 0 0 0;0 1 0 0; 0 0 0 1;0 01 0].

A physical meaning of 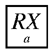 is rotation around the X-axis by an angle a. For example, for a single quantum bit, an initial state of the single quantum bit may be represented as *ρ*₀=(*a b*;*b^{*}* 1-*a*), and a final state obtained by rotating the single quantum bit around the X-axis by the angle a may be represented as *ρ*₁*=RX*(*a*)^{*}× *ρ*₀× *RX*(*a*). Other cases are similar, and details are not described again.

In FIG. 2, quantum measurements are circled by using a black dashed line, and from left to right sequentially represent a probability value that a measurement result is 0 or 1 in a Z direction, an expected value in an X direction, an expected value in a Y direction, and an expected value in the Z direction. Operators representing the expected value in the X direction, the expected value in the Y direction, and the expected value in the Z direction may be combined.

Herein, 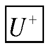 is a combined operation formed by combining multiple quantum operations by a user, and 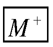 is a combined expectation measurement formed by combining multiple quantum expectation measurement operations by the user.

In addition, an icon in an upper right corner in FIG. 2 represents a function on which the user can perform an operation, including "Initialize", "Run", "Backend", and "Actual circuit". "Initialize" means to set all parameters in a quantum circuit to a specific value. All the parameters may be the specific value or may be random numbers. "Run" can be used to select a single time of running or perform iterative running based on a result returned from the quantum measurement. "Backend" can be used to select a simulator or actual hardware. "Actual circuit" can be used to display an actual quantum circuit and a manner of processing a result to the user when the quantum circuit is run on the hardware.

It should be understood that the quantum operation or the quantum measurement shown in the figure includes but is not limited to that shown in the figure. The quantum operation may further include another operation, and the quantum measurement may further include an expectation measurement operator in another direction. This is not limited.

FIG. 3 is a diagram of a quantum circuit according to an embodiment of this application. A user may place a quantum operation and a quantum measurement on a line representing a quantum bit through dragging, to form a quantum circuit. It may be learned from the figure that the figure includes two quantum circuits: *q*0 and *q*1. Each quantum circuit represents an operation on 1 quantum bit. Therefore, the two quantum circuits included in the figure represent operations on 2 quantum bits. A final output result may include four results: *P*(*q*0:0&*q*1:0) =*A*, *P*(*q*0:0*&q*1:1) *= B, P*(*q*0:1*&q*1:0) = *C*, and *P*(*q*0:1*&q*1:1) = *D,* and A+B+C+D=1. Herein, *P*(*q*0:0*&q*1:0) = *A* represents that a probability that output results of both the quantum circuits *q*0 and *q*1 are 0 is A, *P*(*q*0:0*&q*1:1) = *B* represents that a probability that the output result of the quantum circuit q0 is 0 and the output result of *q*1 is 1 is B, *P*(q0:1&*q*1:0) = *C* represents that a probability that the output result of the quantum circuit *q*0 is 1 and the output result of *q*1 is 0 is C, and *P*(*q*0:1*&q*1:1) *= D* represents that a probability that the output results of both the quantum circuits *q*0 and *q*1 are 1 is D.

The quantum computing method provided in embodiments of this application is described in detail in the following embodiments of this application with reference to the accompanying drawings and application scenarios.

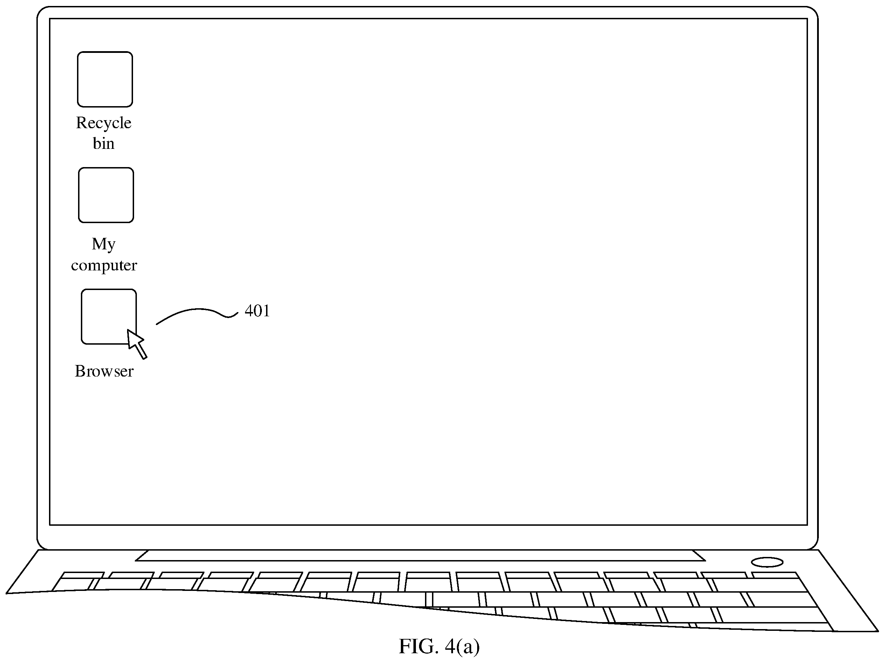

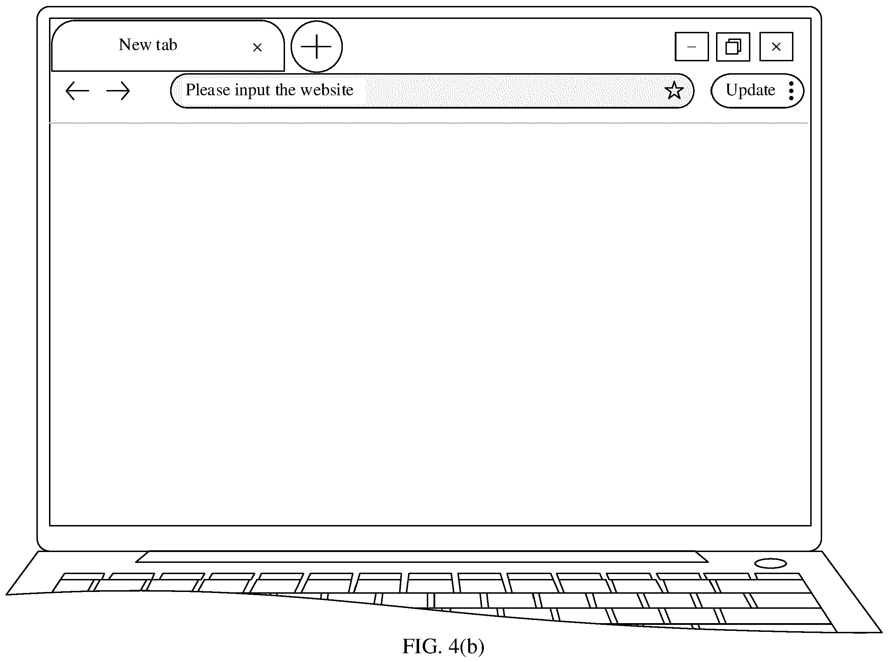

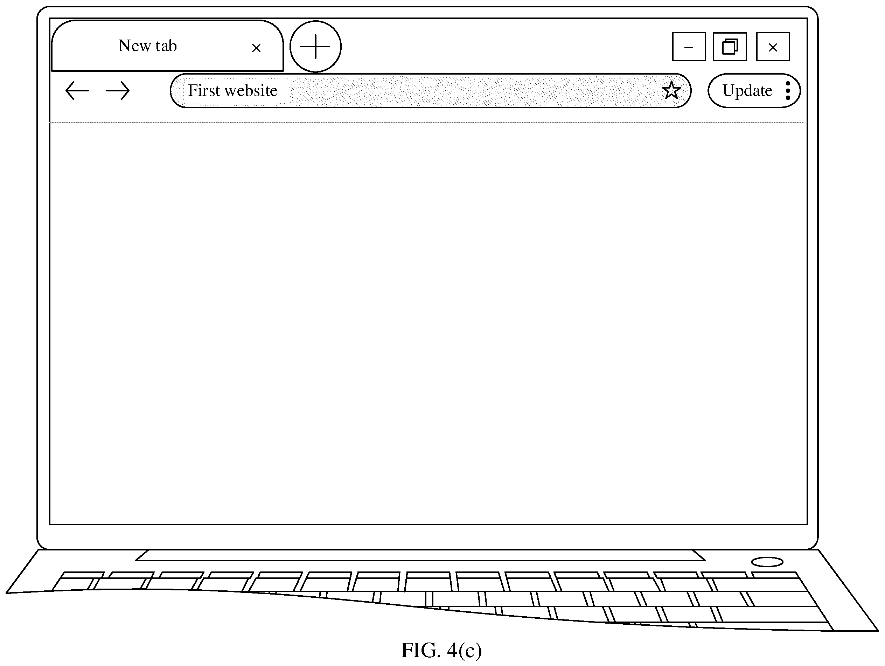

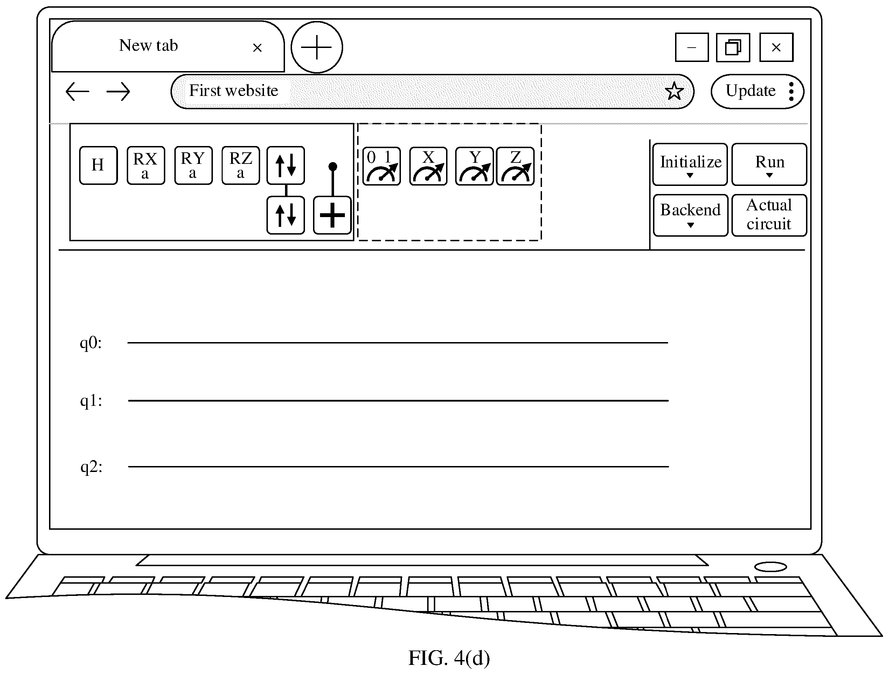

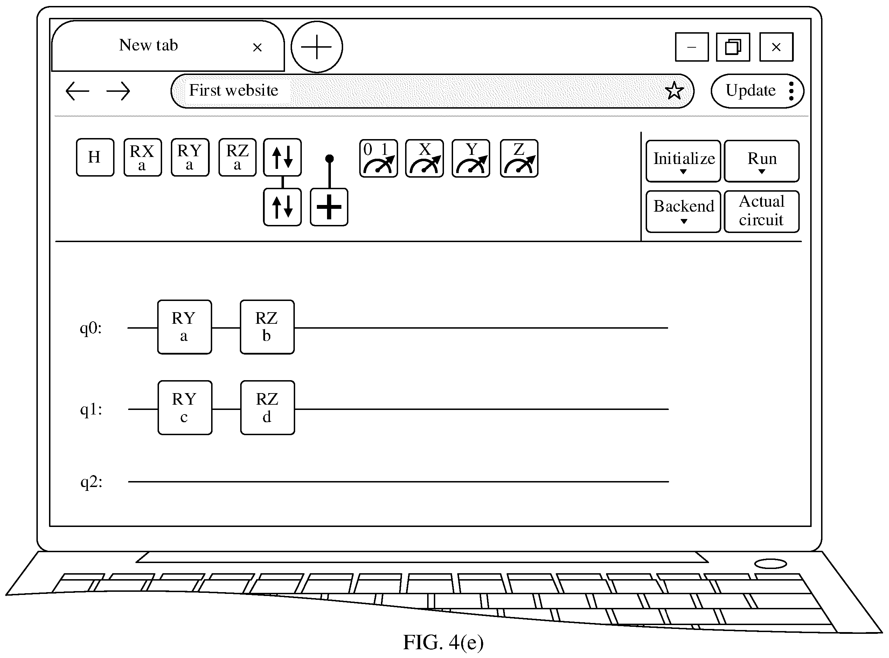

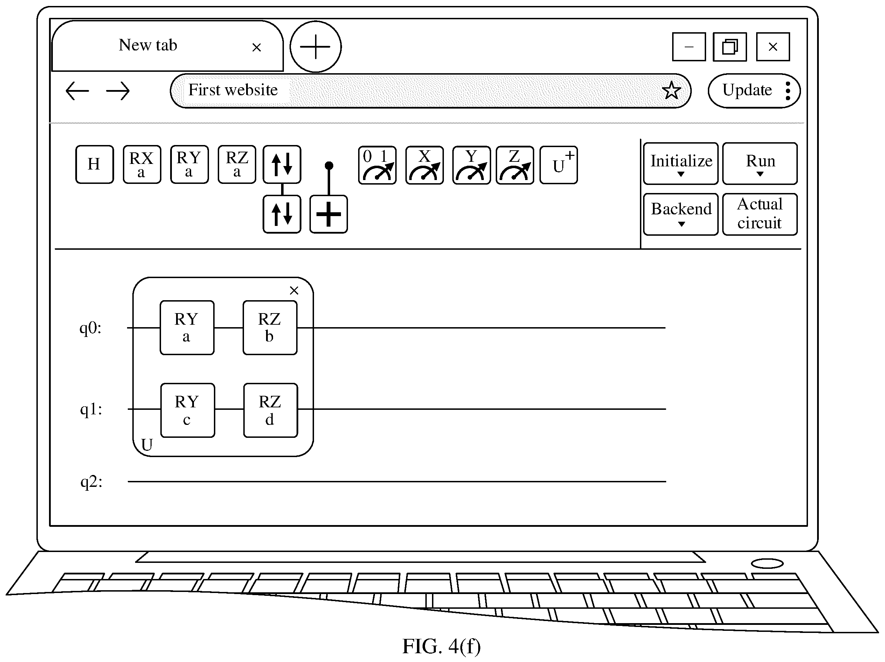

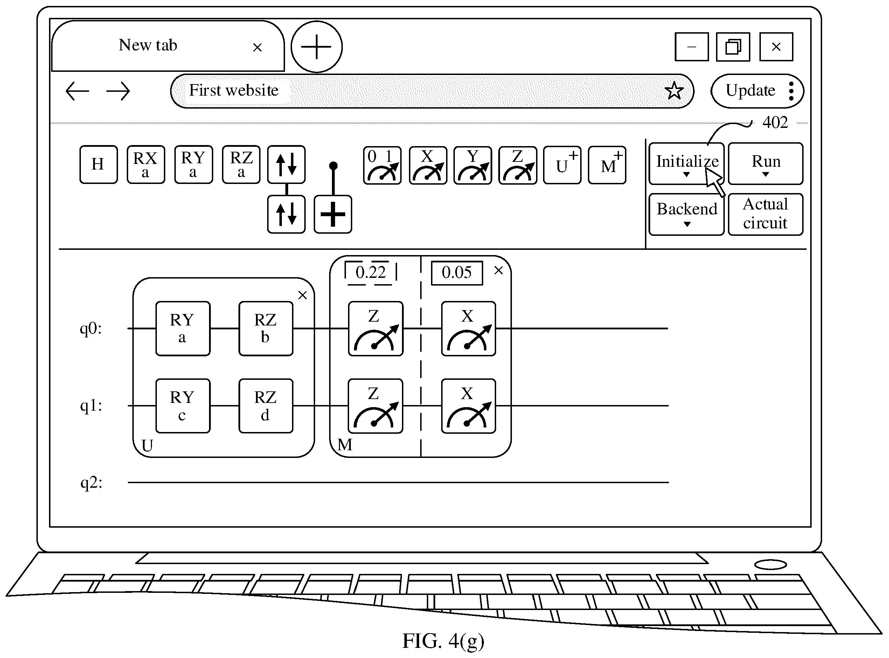

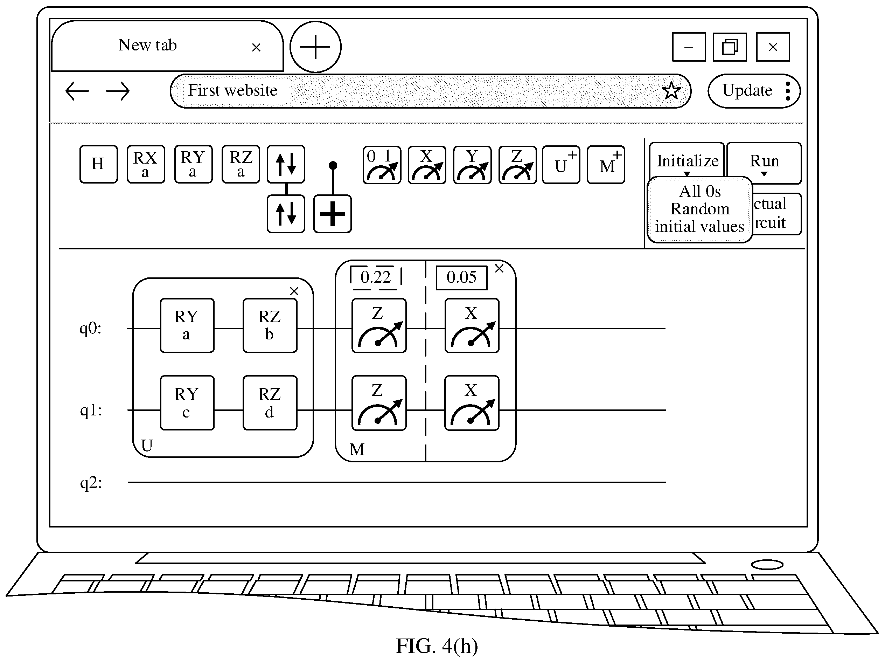

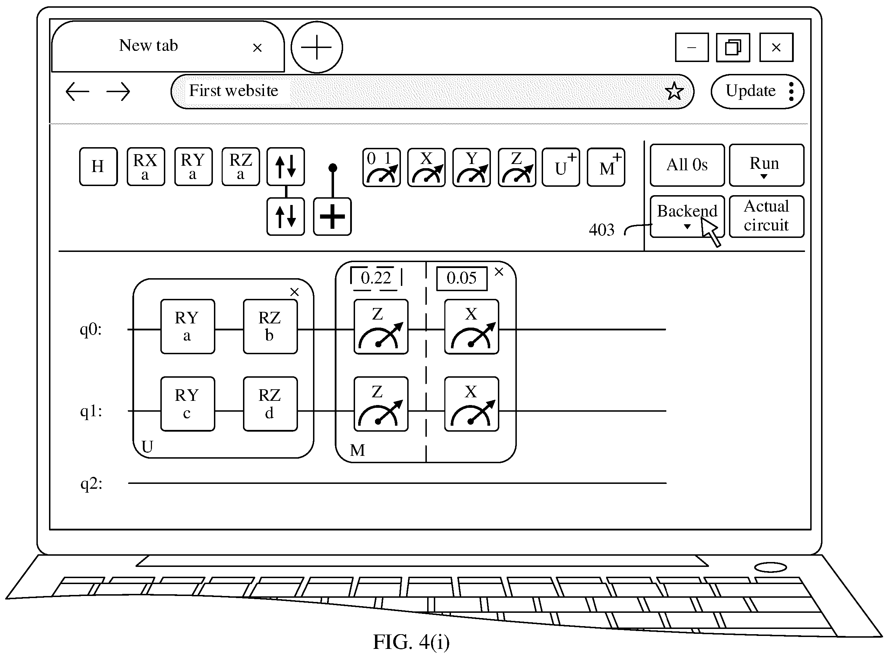

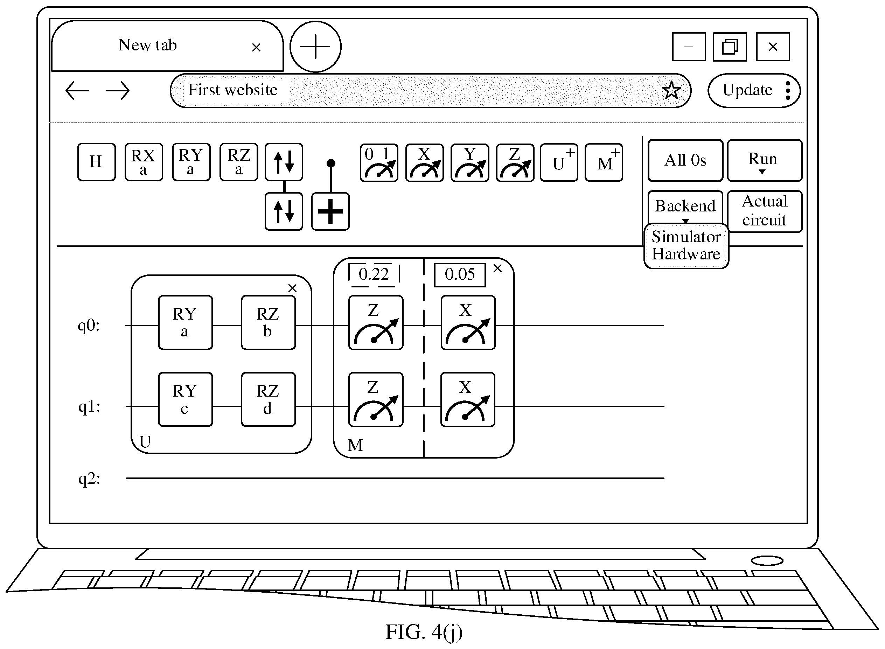

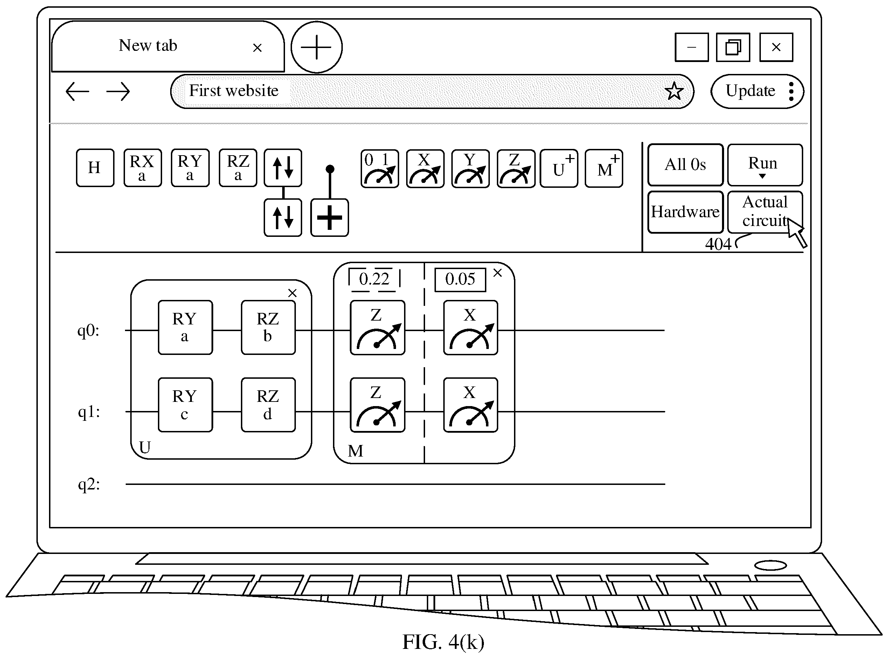

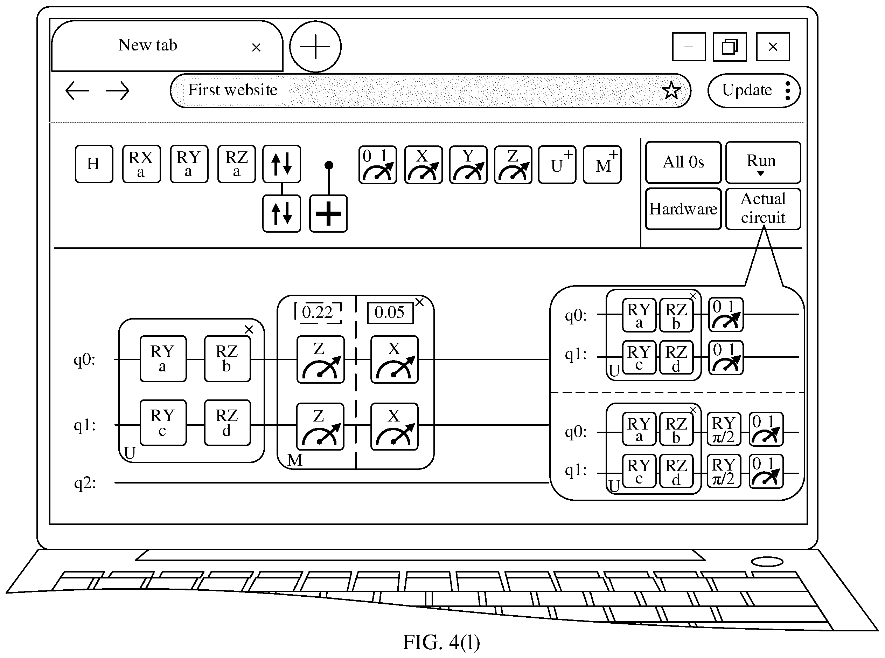

FIG. 4(a), FIG. 4(b), FIG. 4(c), FIG. 4(d), FIG. 4(e), FIG. 4(f), FIG. 4(g), FIG. 4(h), FIG. 4(i), FIG. 4(j), FIG. 4(k), and FIG. 4(l) show a group of graphical user interfaces (graphical user interfaces, GUIs) of a computer. A quantum computing method is shown from FIG. 4(a) to FIG. 4(l).

With reference to a GUI shown in FIG. 4(a), the GUI is a desktop of the computer. The computer desktop may include Recycle bin, My computer, Browser, and the like. After detecting an operation of clicking an icon 401 of the browser on the desktop by a user, the computer may start the browser, and display a GUI shown in FIG. 4(b). The GUI may be referred to as a main interface of the browser.

With reference to the GUI shown in FIG. 4(b), a new blank web page is displayed in the interface. The user may input, in an upper bar box, a website that the user wants to visit. For example, the user may input a first website in the bar box, and a GUI shown in FIG. 4(c) is displayed.

With reference to the GUI shown in FIG. 4(c), in this case, the first website is displayed in the website input box. After detecting that the user inputs the first website and clicks an "OK" button, the computer displays a GUI shown in FIG. 4(d).

With reference to the GUI shown in FIG. 4(d), a main page of quantum computing is displayed in the interface. In the figure, specific quantum operations are circled by using a black solid line, and quantum measurements are circled by using a black dashed line. For a specific meaning represented by each quantum operation or quantum measurement, refer to the content shown in FIG. 2 above. It should be understood that the quantum operation or the quantum measurement shown in FIG. 4(d) includes but is not limited to that shown in the figure. The quantum operation may further include another operation, and the quantum measurement may further include another measurement. This is not limited.

The user may drag any quantum operation or quantum measurement to a circuit (for example, a circuit q0, q1, or q2 shown in the figure). It is assumed that the user drags quantum operations 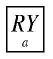 and 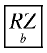 to the circuit q0, and drags quantum operations 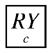 and 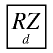 to the circuit q1. In this case, a GUI shown in FIG. 4(e) is displayed.

With reference to the GUI shown in FIG. 4(e), the following content is displayed in the interface: The circuit q0 includes the quantum operations 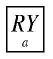 and 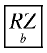 , and the circuit q1 includes the quantum operations 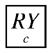 and 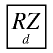 , where parameters *a, b, c, and d* in the quantum operations are variable parameters. In this case, the user may further combine the quantum operations in the two circuits. For example, the user may select all the four quantum operations, then right-click a mouse, and choose, in a pop-up menu, to combine the quantum operations into a new quantum operation gate. After detecting the foregoing operation performed by the user, the computer displays a GUI shown in FIG. 4(f).

With reference to the GUI shown in FIG. 4(f), it may be learned that the four independent quantum operations 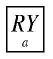 , 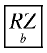 , 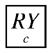 , and 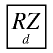 are combined into a new quantum operation gate, that is, 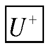 , in this case, and the new quantum operation gate is displayed in an upper part of the interface. Further, the user may drag the quantum measurement to the circuit. It is assumed that the user separately drags quantum measurements 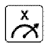 and 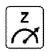 to the circuit q0 and the circuit q1. In this case, a GUI shown in FIG. 4(g) is displayed.

With reference to the GUI shown in FIG. 4(g), the following content is displayed in the interface: The circuit q0 includes the quantum operations 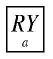 and 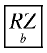 and the quantum measurements 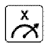 and 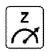 , and the circuit q1 includes the quantum operations 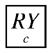 and 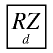 and the quantum measurements 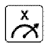 and 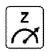 . In addition, after the user drags the quantum operations to the circuit q0 and the circuit q1, the four quantum measurements may be combined into a combined measurement gate, that is, 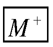 , and the new combined measurement gate is displayed in an upper part of the interface. In addition, a coefficient box is displayed in an upper part of 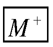 , and the user may set a coefficient in the coefficient box. For example, as displayed in the interface, a measurement coefficient in a Z direction is 0.22, and a measurement coefficient in an X direction is 0.05. Therefore, the user completes construction of a parameterized quantum circuit. After completing construction of the parameterized quantum circuit, the user may make a setting in a functional area in an upper right corner of the interface. After detecting an operation of clicking an icon 402 of "Initialize" by the user, the computer displays a GUI shown in FIG. 4(h).

With reference to the GUI shown in FIG. 4(h), a menu is displayed below the "Initialize" function button, and includes "All 0s" and "Random initial values". If the user selects "All 0s", it indicates that initial values of all parameters in the quantum operations are set to 0. If the user selects "Random initial values", it indicates that initial values of all parameters in the quantum operations are random values. The user may select any initialization setting. For example, the user selects "All 0s". After detecting that the user clicks "All 0s", the computer displays a GUI shown in FIG. 4(i).

With reference to the GUI shown in FIG. 4(i), it may be learned that the "Initialize" function button is displayed as "All 0s". Further, the user may set another function button. After detecting an operation of clicking an icon 403 of "Backend" by the user, the computer displays a GUI shown in FIG. 4(j).

With reference to the GUI shown in FIG. 4(j), a menu is displayed below "Backend", and includes "Simulator" and "Hardware". The user may select any backend setting. After detecting that the user clicks "Hardware", the computer displays a GUI shown in FIG. 4(k).

With reference to the GUI shown in FIG. 4(k), it may be learned that the "Backend" function button is displayed as "Hardware". Further, the user may set another function button. After detecting an operation of clicking an icon 404 of "Actual circuit" by the user, the computer displays a GUI shown in FIG. 4(l).

With reference to the GUI shown in FIG. 4(l), an actual circuit that is of the quantum circuit and that is run on hardware is displayed in a lower right part of the interface. A circuit above a dashed line is an actual circuit that is run on the hardware in the Z direction, and a circuit below the dashed line is an actual circuit that is run on the hardware in the X direction.

In addition, the user may further update the parameter in the quantum operation, to obtain different quantum circuits. For example, the user may click any quantum operation 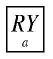 , and update the parameter *a* in the quantum operation.

According to the quantum computing method provided in this application, a parameterized quantum circuit may be constructed. However, in the conventional technology, a parameter needs to be specified as a specific value when a quantum circuit is constructed. Consequently, the constructed quantum circuit is a fixed circuit. Therefore, according to the method for constructing a quantum circuit provided in this application, different quantum circuits can be obtained by changing a specific value of the parameter. Because the quantum circuit in this application may change with the parameter, computing may be performed by using an iterative running method. Compared with the conventional technology in which the iterative running method cannot be used because the constructed circuit is a fixed circuit, the solution provided in this embodiment of this application can optimize a parameter of the quantum circuit to achieve an optimal measurement result. In addition, for a quantum circuit that is run on the hardware, in this application, the quantum circuit is decomposed, based on a combined expectation measurement operator in the quantum circuit, into actual quantum circuits for performing expectation measurements in multiple directions. The actual quantum circuits for performing expectation measurements in multiple directions may be independently run on the hardware, to obtain multiple results. Finally, the multiple results are combined to obtain a combined measurement result in the multiple directions. Compared with the conventional technology in which a quantum circuit is repeatedly compiled and run and only a measurement result in a single direction can be returned at a time, the solution provided in this embodiment of this application can simplify an operation process of repeated compilation, and can return a combination of expectation measurement results in multiple directions during one time of running even if the quantum circuit is run on the hardware. In this way, the user does not need to repeatedly deliver quantum circuits for performing expectation measurements in different directions.

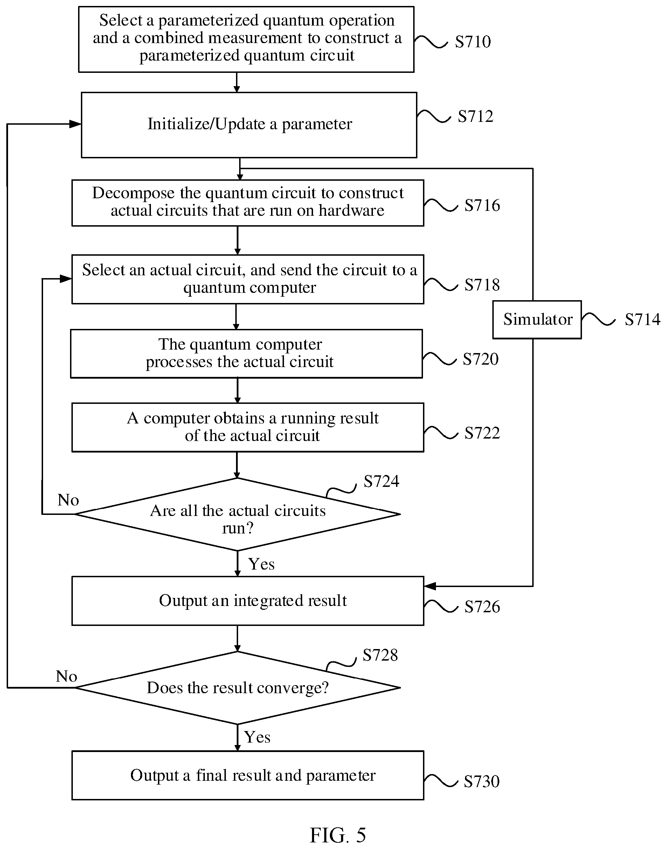

The following describes the solutions in this application in detail with reference to FIG. 5. FIG. 5 is a diagram of a quantum computing method according to an embodiment of this application. The method may include steps S710 to S730. In this embodiment of this application, an example in which a quantum computing platform is a computer is used.

S710: Select a parameterized quantum operation and a quantum measurement to construct a parameterized quantum circuit.

In this embodiment of this application, a user may select any quantum operation and add the quantum operation to a first quantum bit. For example, as shown in FIG. 4(e), the user may select a quantum operation 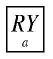 and add the quantum operation to a quantum bit 1. For example, the user drags the quantum operation 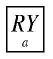 to the circuit q0. The quantum operation 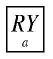 occupies 1 quantum bit. Herein, it may be considered that a quantum bit occupied by the circuit q0 is the quantum bit 1. Similarly, the user may add multiple quantum operations to quantum bits based on a similar method.

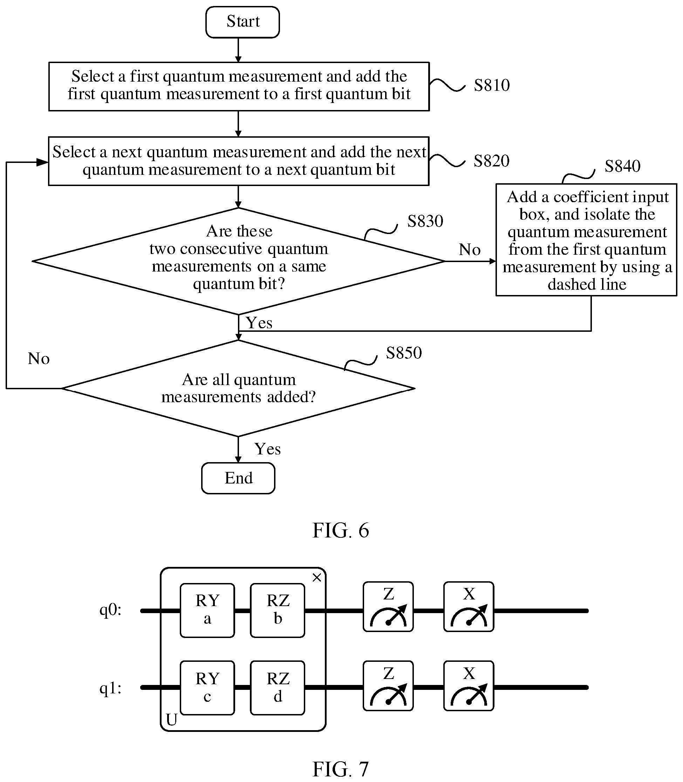

Further, the user may add the quantum measurement to the quantum bit. The user may perform addition based on a method shown in FIG. 6. The method may include steps S810 to S850.

S810: Select a first quantum measurement and add the first quantum measurement to the first quantum bit.

In this embodiment of this application, the user may select any quantum measurement and add the quantum measurement to the first quantum bit. For example, the user may select a quantum measurement 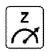 and add the quantum measurement to the quantum bit 1. For example, as shown in FIG. 4(g), the user drags the quantum measurement 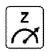 to the circuit q0. The quantum measurement 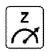 occupies 1 quantum bit. Herein, it may be considered that the quantum bit occupied by the circuit q0 is the quantum bit 1.

S820: Select a next quantum measurement and add the next quantum measurement to a next quantum bit.

The user selects the next quantum measurement and adds the next quantum measurement to the next quantum bit. In this case, the user may add the quantum measurement to the quantum bit 1 or another quantum bit (for example, a quantum bit 2). This is not limited.

S830: Determine whether there are two consecutive quantum measurements on a same quantum bit.

If there are no two consecutive quantum measurements on a same quantum bit, step S840 is performed. If there are two consecutive quantum measurements on a same quantum bit, step S850 is performed.

S840: Add a coefficient input box, and isolate the quantum measurement from the first quantum measurement by using a dashed line.

S850: Determine whether all quantum measurements are added.

If all the quantum measurements are not added, step S820 is performed again. If all the quantum measurements are added, the method ends.

After identifying that the user continuously adds two quantum measurements, the computer may first determine whether the two quantum measurements are on a same quantum bit, and if the two quantum measurements are on the same quantum bit, may continue to determine whether all the quantum measurements are added. If the two quantum measurements are on the same quantum bit, the two quantum measurements may be isolated by using a dashed line. An objective of performing isolation by using the dashed line is to indicate that the two consecutive quantum measurements are not sequentially performed on the quantum circuit, but need to be integrated into a single measurement result based on an expression corresponding to a measurement symbol and returned.

### Example 1:

The user selects the quantum measurement 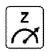 and adds the quantum measurement to the quantum bit 1 in step S810, and selects the quantum measurement 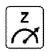 and adds the quantum measurement to the quantum bit 2 in step S820. For example, as shown in FIG. 4(g), the user drags the quantum measurement 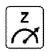 to the circuit q1. Because the two consecutive quantum measurements are respectively added to different quantum bits, the computer may perform further determining to determine whether all the quantum measurements are added, and if it is determined that all the quantum measurements are not added, perform step S820 again to select the next quantum measurement.

If the next quantum measurement selected by the user is a quantum measurement 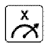 *,* and the quantum measurement is added to the quantum bit 2, because there is already the quantum measurement 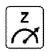 added last time on the quantum bit 2 to which the quantum measurement 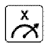 is added, the quantum measurement 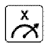 may be isolated, by using a dashed line, from the quantum measurement 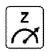 added last time, to indicate that the two consecutive quantum measurements are not sequentially performed on the quantum circuit, but need to be integrated into a single measurement result based on an expression corresponding to a measurement symbol and returned. When the computer determines that all the quantum measurements are added, construction of the parametrized quantum circuit ends this time.

FIG. 7 is a diagram of a parameterized quantum circuit according to an embodiment of this application. It may be learned from the figure that the parameterized quantum circuit may include two parameterized quantum circuits: *q*0 and *q*1. The parameterized quantum circuit q0 includes quantum operations 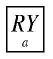 and 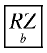 , and the parameterized quantum circuit *q*1 includes quantum operations 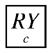 and 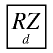 . The four quantum operations are combined into a new quantum operation gate, and parameters *a, b, c,* and *d* in the quantum operations 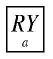 , 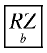 , 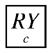 , and 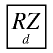 are variable.

In addition, the parameterized quantum circuit *q*0 further includes the quantum measurements 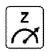 and 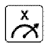 , indicating that the parameterized quantum circuit *q*0 may compute expectations in a Z direction and an X direction. Similarly, the parameterized quantum circuit *q*1 further includes the quantum measurements 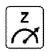 and 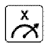 , indicating that the parameterized quantum circuit *q*1 may compute expectations in the Z direction and the X direction.

It should be noted that a sequence of symbols dragged and dropped to a same quantum bit represents a sequence of performing quantum operations. For two consecutive quantum measurements on a same quantum bit, the two quantum measurements may be isolated by using a dashed line, and consecutive quantum measurements on different quantum bits are framed together by using a solid line, to indicate that the measurements should be completed in a same time, and a measurement result needs to be returned.

As shown in FIG. 7, both the parameterized quantum circuits *q*0 and *q*1 include the quantum measurements 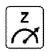 and 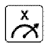 . Therefore, in an actual quantum computing process, expectations of the parameterized quantum circuits *q*0 and *q*1 in the Z direction are completed in a same time, and expectations of the parameterized quantum circuits *q*0 and *q*1 in the X direction are completed in a same time.

S712: Initialize/Update a parameter.

In this embodiment of this application, after construction of the parameterized quantum circuit is completed, the parameters in the quantum operations may be initialized. All the parameters may be set to 0, or the parameters may be set to any other values. This is not limited.

If a simulator executes the parameterized quantum circuit, step S714 may be performed, that is, the computer may simulate a quantum computer to run the quantum circuit on the computer, and output an integrated result, that is, make a jump to step S726. In addition, it should be noted that in this embodiment of this application, if the computer simulates the quantum computer to run the quantum circuit on the computer, the output result is a combined value of running results in multiple directions.

If hardware (that is, a quantum computer) executes the parameterized quantum circuit, step S716 may be performed, that is, the quantum circuit is decomposed to construct actual circuits that are run on the hardware.

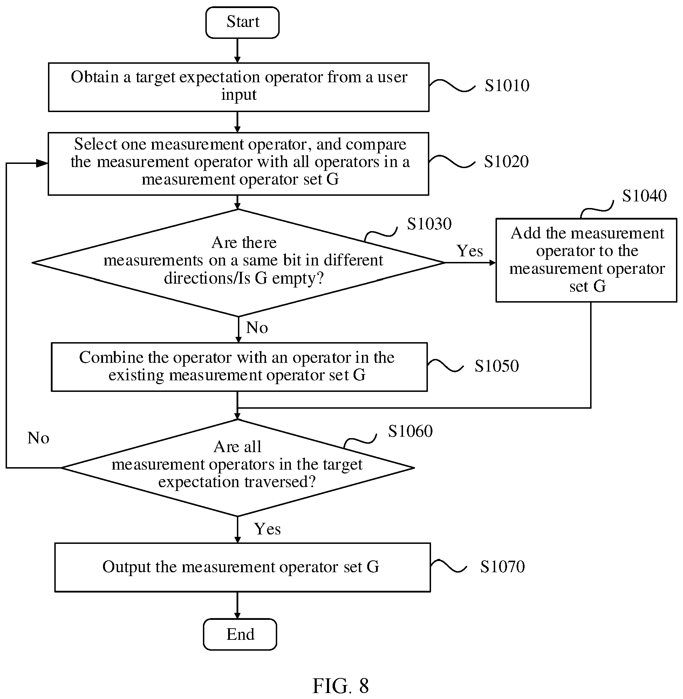

Specifically, when the quantum circuit is decomposed, the quantum circuit may be decomposed based on a measurement combination manner selected by the user. FIG. 8 is a diagram of a method for computing a measurement operator set according to an embodiment of this application. The method may include steps S1010 to S1070.

S1010: Obtain a target expectation operator from a user input.

S1020: Select one measurement operator, and compare the measurement operator with all operators in a measurement operator set G.

An expression *H*=0.22Z₁Z₂ +0.05*X*₁*X*₂ is used as an example. In this case, the target expectation operator in this embodiment of this application may be operators *X*₁*X*₂ *and Z*₁*Z*₂ included in the expression *H*=0.22*Z*₁*Z*₂ +0.05*X*₁*X*₂.

S1030: Determine whether there are measurements on a same bit in different directions/G is empty.

It may be understood that if one measurement operator is compared with all the operators in the measurement operator set G for the first time, because the measurement operator set G is empty in this case, step S1040 may be directly performed. If one measurement operator is compared with all the operators in the measurement operator set G not for the first time, because the measurement operator set G is not empty in this case, the measurement operator may be compared with all the operators in the measurement operator set G, and it is determined, based on a comparison result, to perform step S1040 or S1050.

If there are measurements on a same bit in different directions/G is empty, step S1040 is performed. If there are no measurements on a same bit in different directions/G is not empty, step S1050 is performed.

S1040: Add the measurement operator to the measurement operator set G.

S1050: Combine the operator with an operator in the existing measurement operator set G.

S1060: Determine whether all measurement operators in the target expectation are traversed.

If all the measurement operators are traversed, step S1070 is performed. If all the measurement operators are not traversed, step S1020 is performed again.

S1070: Output the measurement operator set G.

The following uses the expression *H*=0.22*Z*₁*Z*₂ +0.05*X*₁*X*₂ in the foregoing example as an example to compute a measurement operator set G of the expression.

A first operator of *H* is *X*₁*X*₂, and therefore a first measurement operator in the measurement operator set G that needs to be run on the hardware is *X*₁*X*₂. A second operator of *H* is *Z*₁*Z*₂, and overlaps a first quantum bit and a second quantum bit in the first operator in the measurement operator set G, but measurement directions of the overlapping first quantum bit and measurement directions of the overlapping second quantum bit are different. Therefore, a second measurement operator *Z*₁*Z*₂ may be added to the measurement operator set G. Therefore, a finally obtained operator set G that needs to be measured on the hardware is {*X*₁*X*₂,*Z*₁*Z*₂}, that is, needs to be run twice on the hardware.

Because the operator set G that is of the expression and that needs to be finally measured on the hardware is {*X*₁*X*₂,*Z*₁*Z*₂}, and needs to be run twice on the hardware, a quantum circuit corresponding to the expression may be decomposed into two actual circuits that are run on the hardware.

To better understand computing of the measurement operator set, in this embodiment of this application, a Hamiltonian expression *H*=0.22*X*₁*X*₂ +0.15*Z*₁ +0.15*Z*₂ +0.005*Z*₁*Z*₂ of a hydrogen molecule is used as an example for description.

A first operator of *H* is *X*₁*X*₂, and therefore a first measurement operator in the measurement operator set G that needs to be run on the hardware is *X*₁*X*₂. A second operator of *H* is *Z*₁, and overlaps a first quantum bit in the first operator in the measurement operator set G, but measurement directions of the overlapping first quantum bit are different. Therefore, a second measurement operator *Z*₁ may be added to the measurement operator set G. A third operator of *H* is *Z*₂, and overlaps a second quantum bit in the first operator *X*₁*X*₂ in the measurement operator set G, but measurement directions of the overlapping bit are different. In addition, the third operator does not overlap a quantum bit in the second operator *Z*₁ in the measurement operator set G. Therefore, the measurement operator *Z*₂ may be combined with the second operator in the measurement operator set G, that is, the second measurement operator becomes *Z*₁*Z*₂ . A fourth operator of *H* is *Z*₁*Z*₂, and completely overlaps the quantum bit in the second measurement operator in the measurement operator set G, and measurement directions of the overlapping bit are the same. Therefore, there is no need to continue to add the measurement operator. Therefore, a finally obtained operator set G that needs to be measured on the hardware is {*X*₁*X*₂,Z₁Z₂}, that is, needs to be run twice on the hardware.

Because the operator set G that is of the Hamiltonian expression of the hydrogen molecule and that needs to be finally measured on the hardware is {*X*₁*X*₂,*Z*₁*Z*₂}, and needs to be run twice on the hardware, a quantum circuit corresponding to the Hamiltonian expression of the hydrogen molecule may be decomposed into two actual circuits that are run on the hardware.

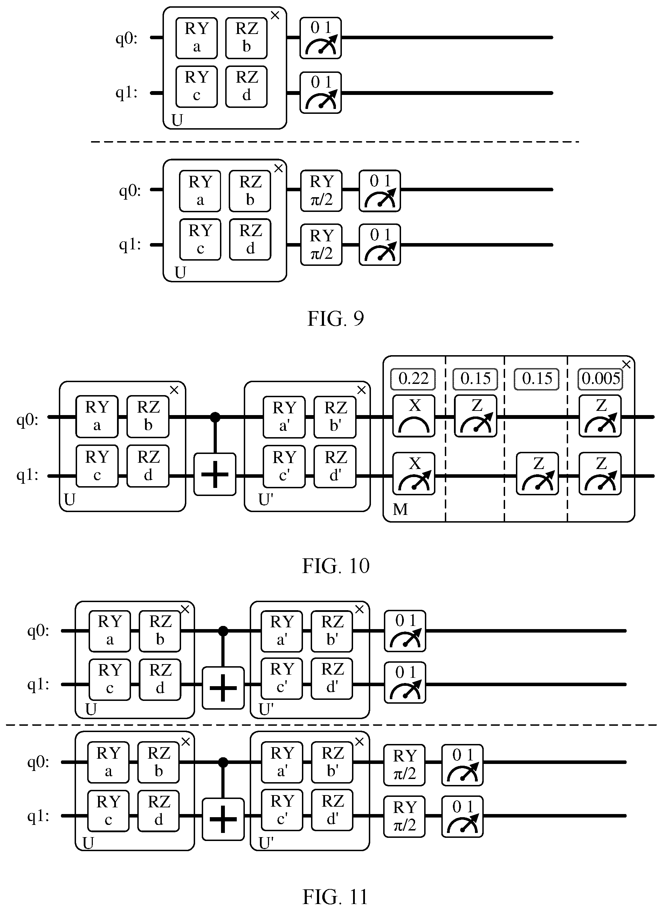

FIG. 9 is a diagram of two actual circuits that are run on hardware and that are obtained by decomposing the quantum circuit in FIG. 7 according to an embodiment of this application. In FIG. 9, a circuit above a dashed line is an actual circuit that is run on the hardware in the Z direction, and a circuit below the dashed line is an actual circuit that is run on the hardware in the X direction.

S718: Select an actual circuit, and send the circuit to the quantum computer.

S720: The quantum computer processes the actual circuit.

S722: The computer obtains a running result of the actual circuit.

S724: Determine whether all the actual circuits are run.

If all the actual circuits are run, step S726 is performed. If all the actual circuits are not run, step S718 is performed again.

S726: Output an integrated result.

In this embodiment of this application, for the two actual circuits, the computer may select one of the actual circuits, and send the actual circuit to the quantum computer. For example, the computer may first select the actual circuit that is run in the *Z* direction, and send the actual circuit to the quantum computer, and after completing processing, the quantum computer may send a running result to the computer. Then, the computer sends the other actual circuit to the quantum computer, and after completing processing, the quantum computer sends a running result to the computer. After determining that all the actual circuits are run, the computer may output the integrated result.

The integrated result may be determined based on a running result obtained by running each actual circuit by the quantum computer. For example, it is assumed that two actual circuits that are run on the quantum computer are constructed after the computer decomposes the quantum circuits, and are a quantum measurement in the *Z* direction and a quantum measurement in the X direction, a measurement coefficient in the *Z* direction is a1, and a measurement coefficient in the X direction is a2. In this case, a product of a running result in each direction and a measurement coefficient in the direction may be first computed, and then a sum of products in multiple directions may be computed.

S728: Determine whether the result converges.

If the result converges, step S730 is performed. If the result does not converge, step S712 is performed again.

After obtaining the integrated result, the computer may first determine whether the integrated result converges; and if the integrated result converges, may output a current parameter and the integrated result to the user; or if the integrated result does not converge, may update the parameters in the parameterized quantum operations, and reconstruct actual circuits that are run on the hardware. The quantum computer processes the reconstructed actual circuits, and after completing processing, sends running results to the computer, and the computer may integrate the running results again, and determine whether the integrated result converges.

Certainly, in some possible implementations, after running all the actual circuits, the quantum computer may obtain an integrated result based on running results obtained by running all the actual circuits, and then send the integrated result to the computer. This is not limited.

Whether the result converges in this embodiment of this application may be understood as whether the integrated result is a smallest value in all results. In a possible implementation, it is assumed that after the user initializes the parameter for the first time, an obtained integrated result is w1. It is assumed that after the user updates the parameter for the second time (for example, the user increases the initialization parameter by a first step), an obtained integrated result is w2, and w2<w1, which indicates that a direction of step change is desirable in this case, and the user may update the parameter again. It is assumed that after the user updates the parameter for the third time (for example, the user increases the parameter obtained through the second time of updating by a second step, and the second step is less than the first step), an obtained integrated result is w3, and w3<w2<w1. In this case, the user may update the parameter again. It is assumed that after the user updates the parameter for the fourth time (for example, the user increases the parameter obtained through the third time of updating by a third step, and the third step is less than the first step), an obtained integrated result is w4, and w4>w3<w2<w1. In this case, it may be determined that w3 is a smallest value in all the results. Therefore, it may be determined that the result w3 converges, and w3 and a value of a parameter corresponding to w3 are finally output.

In another possible implementation, the user may set a quantity of iterations, and the computer may perform running based on the specified quantity of iterations, may record a result obtained after each time of running is completed, and when the iteration ends, may select a smallest result from results obtained through multiple times of running, and output the result and a parameter corresponding to the result.

According to the solution provided in this embodiment of this application, a parameterized quantum circuit may be constructed, and different quantum circuits may be obtained by changing a specific value of the parameter. Because the quantum circuit in this application may change with the parameter, computing may be performed by using an iterative running method, and a parameter of the quantum circuit may be optimized in an iterative manner, to achieve an optimal combined measurement result. In addition, for a quantum circuit that is run on the hardware, in this application, the quantum circuit is decomposed, based on a combined expectation measurement operator in the quantum circuit, into actual quantum circuits for performing expectation measurements in multiple directions. The actual quantum circuits for performing expectation measurements in multiple directions may be independently run on the hardware, to obtain multiple results. Finally, the multiple results are combined to obtain a combined measurement result in the multiple directions. This can simplify an operation process of repeated compilation, and can return a combination of expectation measurement results in multiple directions during one time of running even if the quantum circuit is run on the hardware. In this way, the user does not need to repeatedly deliver quantum circuits for performing expectation measurements in different directions. For a quantum circuit that is run on the simulator, in this application, a combination of measurement results in multiple directions may be returned to the user, and the measurement results in the multiple directions may be preserved, so that some quantum circuits that depend on more information may be run, and a classical-quantum hybrid variational quantum algorithm may be run.

In addition, as described in step S1070, the Hamiltonian expression of the hydrogen molecule is *H*=0.22*X*₁*X*₂ +0.15*Z*₁ +0.15*Z*₂ +0.005*Z*₁*Z*₂, and the quantum circuit corresponding to the Hamiltonian expression of the hydrogen molecule is decomposed into two actual circuits that are run on the hardware.

If eigenenergy of the Hamiltonian is solved by using a VQE algorithm, because the algorithm requires interaction between two quantum bits, the user may drag another controlled NOT gate (controlled NOT gate, CNOT), and eight parameters are required to obtain a proper result. Therefore, the user may drag previously defined 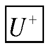 to the circuit again, and remap the parameters, so that 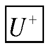 becomes 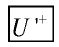 . Parameters that need to be received by 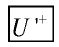 are completely different from the parameters received by 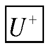 , and are a', b', c', and d'. Finally, a measurement operation in the X direction is selected from the quantum measurement and applied to *q*0 and *q*1. Then, one measurement operation in the *Z* direction continues to be performed on *q*0. Because there are two measurement operations on a same quantum bit, these measurement operations may automatically become a combined measurement M, and a measurement operation in the *Z* direction continues to be added to *q*1. Finally, a measurement operation in the *Z* direction is added to both *q*0 and *q*1, and a specific value (the specific value is a corresponding coefficient in the Hamiltonian expression of the hydrogen molecule) is added to a corresponding operation, to complete construction of a quantum circuit, as shown in FIG. 10.

The quantum circuit is decomposed based on the method shown in FIG. 8, to obtain actual circuits that are run on the hardware, as shown in FIG. 11. In FIG. 11, a circuit above a dashed line is an actual circuit that is run on the hardware in the *Z* direction, and a circuit below the dashed line is an actual circuit that is run on the hardware in the X direction.

It should be understood that the values shown in the foregoing examples are merely examples for description, may be other values, and should not constitute a special limitation on this application.

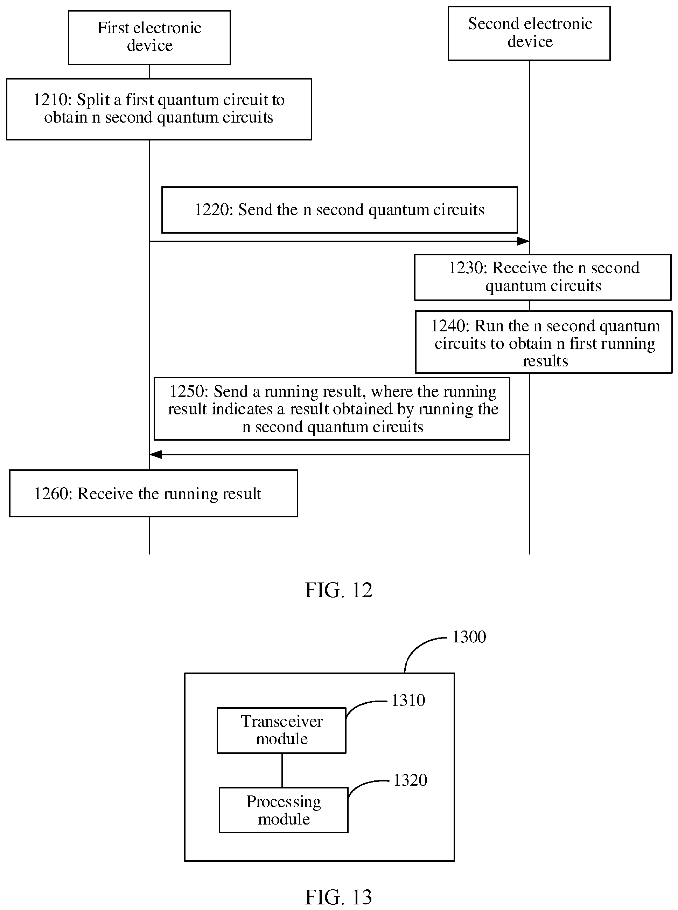

FIG. 12 is a diagram of a quantum computing method according to an embodiment of this application. The method may be performed by a first electronic device and a second electronic device. The first electronic device may be the computer in the foregoing embodiments, and the second electronic device may be the quantum computer in the foregoing embodiments. The method may include steps 1210 to 1260.

1210: The first electronic device splits a first quantum circuit to obtain n second quantum circuits.

Herein, n may be an integer greater than or equal to 2.

It may be understood that the n second quantum circuits in this embodiment of this application are the actual circuits in the foregoing example. In other words, a quantity of second quantum circuits is a quantity of actual circuits in the foregoing example.

1220: The first electronic device sends the n second quantum circuits to the second electronic device.

1230: The second electronic device receives the n second quantum circuits sent by the first electronic device.

1240: The second electronic device runs the n second quantum circuits to obtain n first running results.

1250: The second electronic device sends a running result to the first electronic device, where the running result indicates a result obtained by running the n second quantum circuits.

1260: The first electronic device receives a running result sent by the second electronic device.

According to the solution provided in this embodiment of this application, the first electronic device may split the first quantum circuit, and send, to the second electronic device, the n second quantum circuits obtained through splitting. After receiving the n second quantum circuits, the second electronic device runs the n second quantum circuits to obtain the n first running results, and then sends the running result to the first electronic device, where the running result indicates the result obtained by running the n second quantum circuits. Compared with a solution, in the conventional technology, in which a quantum circuit is repeatedly compiled and run and only a measurement result in a single direction can be returned at a time, the solution provided in this embodiment of this application can simplify an operation process of repeated compilation, and can return running results in multiple directions during one time of running. In this way, a user does not need to repeatedly deliver quantum circuits for performing expectation measurements in different directions.

Optionally, in some embodiments, the first quantum circuit includes quantum measurements in n directions, and the second quantum circuit includes a quantum measurement in one direction.

It may be understood that in this embodiment of this application, each second quantum circuit includes a quantum measurement in one direction, and quantum measurements included in all the second quantum circuits have different directions. For example, it is assumed that the first quantum circuit includes quantum measurements in two directions (for example, an X direction and a *Z* direction). After splitting the first quantum circuit, the first electronic device may obtain two second quantum circuits. In the two second quantum circuits, one second quantum circuit may include a quantum measurement in one direction (for example, the X direction), and the other second quantum circuit may include a quantum measurement in the other direction (for example, the *Z* direction).

According to the solution provided in this embodiment of this application, the first quantum circuit includes the quantum measurements in the n directions. When splitting the first quantum circuit, the first electronic device may obtain the n second quantum circuits, and each second quantum circuit includes a quantum measurement in one direction. This can ensure accuracy of splitting the first quantum circuit, and help the second electronic device improve accuracy of the n first running results obtained by running the n second quantum circuits by the second electronic device.

Optionally, in some embodiments, the splitting the first quantum circuit includes:
splitting the first quantum circuit based on a measurement operator corresponding to the first quantum circuit.

In this embodiment of this application, for content of splitting the first quantum circuit based on the measurement operator corresponding to the first quantum circuit, refer to the content shown in FIG. 8. Details are not described again.

According to the solution provided in this embodiment of this application, the first electronic device may split the first quantum circuit based on the measurement operator corresponding to the first quantum circuit. This can improve accuracy of splitting the first quantum circuit, and further can improve accuracy of the n first running results obtained by running the n second quantum circuits by the second electronic device.

Optionally, in some embodiments, the first quantum circuit corresponds to M measurement operators, and the splitting the first quantum circuit based on the measurement operator corresponding to the first quantum circuit includes:
for a j^{th} measurement operator, adding the j^{th} measurement operator to a measurement operator set, where j is any value less than or equal to M;
for a k^{th} measurement operator, determining whether there is a measurement operator that has a same quantum bit as and a different direction from the k^{th} measurement operator in the measurement operator set, where k traverses 1 to M and k≠j; and
combining the k^{th} measurement operator with an existing measurement operator in the measurement operator set based on a determining result, or adding the k^{th} measurement operator to the measurement operator set.

According to the solution provided in this embodiment of this application, for the j^{th} measurement operator, the first electronic device may add the j^{th} measurement operator to the measurement operator set; and for the k^{th} measurement operator, the first electronic device may determine whether there is a measurement operator that has a same quantum bit as and a different direction from the k^{th} measurement operator in the measurement operator set, and perform a further operation based on the determining result, to split the first quantum circuit. According to the method, a smallest quantity of second quantum circuits are obtained by splitting the first quantum circuit. Therefore, it can be ensured that the second electronic device runs a smallest quantity of second quantum circuits, thereby reducing a running time and improving efficiency.

Optionally, in some embodiments, the combining the k^{th} measurement operator with the existing measurement operator in the measurement operator set based on the determining result, or adding the k^{th} measurement operator to the measurement operator set includes: if there is a measurement operator that has a same quantum bit as and a different direction from the k^{th} measurement operator in the measurement operator set, adding the k^{th} measurement operator to the measurement operator set; or if there is no measurement operator that has a same quantum bit as and/or a different direction from the k^{th} measurement operator in the measurement operator set, combining the k^{th} measurement operator with the existing measurement operator in the measurement operator set.

According to the solution provided in this embodiment of this application, if there is a measurement operator that has a same quantum bit as and a different direction from the k^{th} measurement operator in the measurement operator set, the first electronic device may add the k^{th} measurement operator to the measurement operator set; or if there is no measurement operator that has a same quantum bit as and/or a different direction from the k^{th} measurement operator in the measurement operator set, the first electronic device may combine the k^{th} measurement operator with the existing measurement operator in the measurement operator set, to split the first quantum circuit. According to the method, a smallest quantity of second quantum circuits are obtained by splitting the first quantum circuit. Therefore, it can be ensured that the second electronic device runs a smallest quantity of second quantum circuits, thereby reducing a running time and improving efficiency.

Optionally, in some embodiments, the first quantum circuit includes a quantum operation including a first parameter, and a specific value of the first parameter is variable.

According to the solution provided in this embodiment of this application, the first quantum circuit may further include the quantum operation including the first parameter, and the specific value of the first parameter is variable. In the conventional technology, a parameter needs to be specified as a specific value when a quantum circuit is constructed. Consequently, the constructed quantum circuit is a fixed circuit. Therefore, according to the method provided in this application, different quantum circuits can be obtained by changing a specific value of the parameter, thereby improving flexibility and diversity.

Optionally, in some embodiments, the quantum operation including the first parameter includes multiple quantum operations, the first quantum circuit further includes a quantum operation including a second parameter, the quantum operation including the second parameter is obtained by using a combined operation gate, and the combined operation gate is a combined gate including the multiple quantum operations.

According to the solution provided in this embodiment of this application, the first quantum circuit may further include the quantum operation including the second parameter, that is, the first quantum circuit may include the quantum operation including the first parameter and the quantum operation including the second parameter, and the quantum operation including the second parameter is obtained by using the combined operation gate. The quantum operation including the second parameter in the first quantum circuit is obtained by using the combined operation gate. Therefore, compared with a solution, in the conventional technology, in which the user needs to separately drag each quantum operation to the quantum circuit, the solution provided in this embodiment of this application can simplify an operation performed by the user.

Optionally, in some embodiments, the running result includes the n first running results or a first combined result determined based on the n first running results, and the n first running results are results obtained by running the n second quantum circuits by the second electronic device.

Optionally, in some embodiments, the running result includes the n first running results, and the method further includes: determining the first combined result based on the n first running results and a coefficient of the measurement operator corresponding to the first quantum circuit.

The coefficient of the measurement operator corresponding to the first quantum circuit in this embodiment of this application may be the coefficients 0.22 and 0.05 displayed above the quantum measurements shown in FIG. 4(g). The n first running results include running results in the n directions, and the first combined result is a sum of a product of a first running result in the X direction and the measurement coefficient 0.05 in the X direction and a product of a first running result in the Z direction and the measurement coefficient 0.22 in the Z direction.

According to the solution provided in this embodiment of this application, if the running result includes the n first running results, the first electronic device may determine the first combined result based on the n first running results and the coefficient of the measurement operator corresponding to the first quantum circuit. Different first combined results may be obtained by setting different coefficients, thereby improving flexibility of quantum computing.

Optionally, in some embodiments, the first quantum circuit is a quantum circuit of which the first parameter is initialized, and the method further includes:
The first electronic device receives an operation of updating the first parameter for a w^{th} time by the user, and sends, to the second electronic device, a second quantum circuit of which the first parameter is updated, where a value of w starts from 1;
the second electronic device receives the second quantum circuit that is sent by the first electronic device and that is obtained by updating the first parameter for the w^{th} time;
the second electronic device runs the second quantum circuit of which the first parameter is updated for the w^{th} time, to obtain n (w+1)^{th} running results;
the second electronic device sends, to the first electronic device, a running result obtained through a (w+1)^{th} time of running, where the running result obtained through the (w+1)^{th} time of running includes the n (w+1)^{th} running results or a (w+1)^{th} combined result, and the (w+1)^{th} combined result is obtained based on the n (w+1)^{th} running results;
the first electronic device receives the running result that is sent by the second electronic device and that is obtained through the (w+1)^{th} time of running;
the first electronic device determines whether the (w+1)^{th} combined result converges; and
the first electronic device displays a target result and a target parameter when the (w+1)^{th} combined result converges, where the target result is a combined result with a smallest value in combined results, and the target parameter is a parameter corresponding to the combined result with the smallest value.

In this embodiment of this application, for specific content of determining whether the combined result converges, refer to the related content in step 728. Details are not described again.

According to the solution provided in this embodiment of this application, the user may update the first parameter for multiple times; the first electronic device may send, to the second electronic device, the second quantum circuit obtained through the w^{th} time of updating; and the second electronic device may run, for the w^{th} time, the second quantum circuit of which the first parameter is updated, to obtain the n (w+1)^{th} running results, and send, to the first electronic device, the running result obtained through the (w+1)^{th} time of running. After receiving the running result obtained through the (w+1)^{th} time of running performed by the second electronic device, the first electronic device may determine whether the (w+1)^{th} combined result (the (w+1)^{th} combined result is obtained based on the n (w+1)^{th} running results) converges, and display the target result and the target parameter when the (w+1)^{th} combined result converges. Because the user may update the first parameter in the first quantum circuit for multiple times, the second electronic device may separately run a second quantum circuit obtained through each time of updating, and send a running result to the first electronic device. After receiving the running result each time, the first electronic device may determine whether a combined result (the combined result may be the running result or may be a result obtained based on the running result) converges, and display the target result and the target parameter when the combined result converges. In other words, according to the solution provided in this embodiment of this application, computing may be performed by using an iterative running method. Compared with the conventional technology in which the iterative running method cannot be used because the constructed circuit is a fixed circuit, the solution provided in this embodiment of this application can optimize a parameter of the quantum circuit to achieve an optimal measurement result.

Optionally, in some embodiments, the method further includes: displaying the n second quantum circuits in response to a first operation performed by the user.

The first operation in this embodiment of this application may be an operation of clicking an icon 404 of "Actual circuit" by the user in FIG. 4(k), and if n=2, the n second quantum circuits may be the two actual circuits displayed in the lower right part of the interface shown in FIG. 4(l).

According to the solution provided in this embodiment of this application, in response to the first operation performed by the user, the first electronic device may display the n second quantum circuits, to present a specific adaptation made by the second electronic device to run a variational quantum algorithm, so that the user can intuitively view underlying running logic, thereby improving perception of quantum hardware.

It should be understood that the specific example shown in FIG. 12 in embodiments of this application is merely intended to help a person skilled in the art better understand embodiments of this application, but not to limit the scope of embodiments of this application. It should be further understood that sequence numbers of the foregoing processes do not mean execution sequences. The execution sequences of the processes should be determined based on functions and internal logic of the processes, and should not constitute any limitation on the implementation processes of embodiments of this application.

It should be further understood that in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that in some of the foregoing embodiments, a device in an existing network architecture is mainly used as an example for description. It should be understood that a specific form of the device is not limited in embodiments of this application. For example, all devices that can implement a same function in the future are applicable to embodiments of this application.

It may be understood that in the foregoing method embodiments, the methods and operations implemented by the devices (for example, the first electronic device and the second electronic device) may alternatively be implemented by parts (for example, chips or circuits) that can be used in the devices.

The quantum computing method provided in embodiments of this application is described in detail above with reference to FIG. 12. The quantum computing method is mainly described from a perspective of interaction between the first electronic device and the second electronic device. It may be understood that to implement the foregoing functions, the first electronic device and the second electronic device include corresponding hardware structures and/or software modules for performing the functions.

A person skilled in the art should be aware that the example units, algorithms, and steps described with reference to embodiments disclosed in this specification can be implemented in this application by using hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

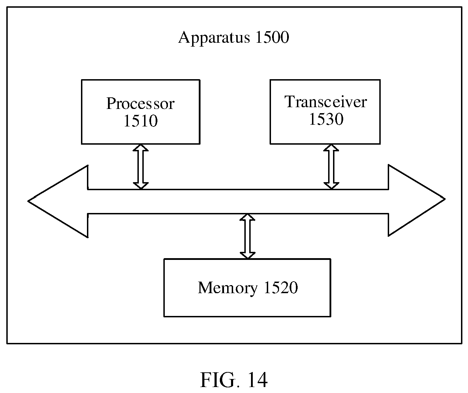

The quantum computing apparatus provided in embodiments of this application is described in detail below with reference to FIG. 13 and FIG. 14. It should be understood that descriptions of the apparatus embodiments correspond to the descriptions of the method embodiments. Therefore, for content that is not described in detail, refer to the foregoing method embodiments. For brevity, details of some content are not described herein again.

In embodiments of this application, a transmitting device or a receiving device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that in embodiments of this application, division into the modules is an example, is merely logical function division, and may be other division in actual implementation. An example in which each functional module is obtained through division based on each corresponding function is used below for description.

FIG. 13 is a block diagram of a quantum computing apparatus 1300 according to an embodiment of this application. The quantum computing apparatus 1300 may include a transceiver module 1310 and a processing module 1320. The transceiver module 1310 may implement a corresponding communication function. The processing module 1320 is configured to process data. The transceiver module 1310 may also be referred to as a communication interface, a communication unit, or the like.

Optionally, the quantum computing apparatus 1300 may further include a memory unit. The memory unit may be configured to store instructions and/or data. The processing module 1320 may read the instructions and/or the data in the memory unit, to enable the apparatus to implement the foregoing method embodiments.

The quantum computing apparatus 1300 may be configured to perform the action performed by the electronic device (for example, the first electronic device and the second electronic device) in the foregoing method embodiments. In this case, the quantum computing apparatus 1300 may be a first electronic device, for example, a computer. The transceiver module 1310 is configured to perform a receiving/sending-related operation on the first electronic device side in the foregoing method embodiments. The processing module 1320 is configured to perform a processing-related operation on the first electronic device side in the foregoing method embodiments.

In a design, the quantum computing apparatus 1300 is configured to perform the action performed by the first electronic device in the foregoing method embodiments.

In a possible implementation, the processing module 1320 is configured to split a first quantum circuit to obtain n second quantum circuits; and
the transceiver module 1310 is configured to send the n second quantum circuits to a second electronic device; and further configured to receive a running result sent by the second electronic device, where the running result indicates a result obtained by running the n second quantum circuits.

The quantum computing apparatus 1300 may implement the corresponding steps or procedures performed by the first electronic device in the method embodiments in embodiments of this application. The quantum computing apparatus 1300 may include units configured to perform the method performed by the first electronic device in the method embodiments. In addition, the units in the quantum computing apparatus 1300 and the foregoing other operations and/or functions are respectively used to implement the corresponding procedures in the method embodiments of the first electronic device in the method embodiments.

It should be understood that a specific process in which the units perform the foregoing corresponding steps is described in detail in the foregoing method embodiments. For brevity, details are not described herein again.

In another design, the apparatus 1300 is configured to perform the action performed by the second electronic device in the foregoing method embodiments.

In a possible implementation, the transceiver module 1310 is configured to receive n second quantum circuits sent by a first electronic device, where the n quantum circuits are quantum circuits obtained by splitting a first quantum circuit;
the processing module 1320 is configured to run the n second quantum circuits to obtain n first running results; and
the transceiver module 1310 is further configured to send a running result to the first electronic device, where the running result indicates a result obtained by running the n second quantum circuits.

The quantum computing apparatus 1300 may implement the corresponding steps or procedures performed by the second electronic device in the method embodiments in embodiments of this application. The quantum computing apparatus 1300 may include units configured to perform the method performed by the second electronic device in the method embodiments. In addition, the units in the quantum computing apparatus 1300 and the foregoing other operations and/or functions are respectively used to implement the corresponding procedures in the method embodiments of the second electronic device in the method embodiments.

It should be understood that a specific process in which the units perform the foregoing corresponding steps is described in detail in the foregoing method embodiments. For brevity, details are not described herein again.

The processing module 1320 in the foregoing embodiment may be implemented by at least one processor or processor-related circuit. The transceiver module 1310 may be implemented by a transceiver or a transceiver-related circuit. The memory unit may be implemented by at least one memory.

As shown in FIG. 14, an embodiment of this application further provides a quantum computing apparatus 1500. The apparatus 1500 includes a processor 1510, and may further include one or more memories 1520. The processor 1510 is coupled to the memory 1520. The memory 1520 is configured to store a computer program or instructions and/or data. The processor 1510 is configured to execute the computer program or the instructions and/or the data stored in the memory 1520, so that the method in the foregoing method embodiments is performed. Optionally, the apparatus 1500 includes one or more processors 1510.

Optionally, the memory 1520 and the processor 1510 may be integrated or separately disposed.

Optionally, as shown in FIG. 14, the apparatus 1500 may further include a transceiver 1530, and the transceiver 1530 is configured to receive and/or send a signal. For example, the processor 1510 is configured to control the transceiver 1530 to receive and/or send a signal.

In a solution, the apparatus 1500 is configured to implement the operation performed by the quantum computing apparatus (for example, the first electronic device or the second electronic device) in the foregoing method embodiments.

An embodiment of this application further provides a computer-readable storage medium. The computer-readable storage medium stores computer instructions for implementing the method performed by the quantum computing apparatus (for example, the first electronic device or the second electronic device) in the foregoing method embodiments.

For example, when the computer program is executed by a computer, the computer can be caused to implement the method performed by the quantum computing apparatus (for example, the first electronic device or the second electronic device) in the foregoing method embodiments.

An embodiment of this application further provides a computer program product including instructions. When the instructions are executed by a computer, the computer is caused to implement the method performed by the quantum computing apparatus (for example, the first electronic device or the second electronic device) in the foregoing method embodiments.

An embodiment of this application further provides a system. The system includes the first electronic device and the second electronic device in the foregoing embodiments.

For explanations and beneficial effects of related content in any apparatus provided above, refer to the corresponding method embodiment provided above. Details are not described herein again.

It should be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (memory module) may be integrated into the processor.

It should be further noted that the memory described in this specification is intended to include but is not limited to these memories and any other memory of a suitable type.

A person of ordinary skill in the art may be aware that the example units and steps described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located at one location, or may be distributed on multiple network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by using software, hardware, firmware, or any combination thereof. When software is used for implementation, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. For example, the computer may be a personal computer, a server, or a network device. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center, into which one or more usable media are integrated. The usable medium may be a magnetic medium (for example, a floppy disk, a hard disk drive, or a magnetic tape), an optical medium (for example, a DVD), a semiconductor medium (for example, a solid-state disk (solid-state disk, SSD)), or the like. For example, the usable medium may include but is not limited to various media that can store program code, for example, a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A quantum computing method, wherein the method is applied to a first electronic device, and the method comprises:
splitting a first quantum circuit to obtain n second quantum circuits;
sending the n second quantum circuits to a second electronic device; and
receiving a running result sent by the second electronic device, wherein the running result indicates a result obtained by running the n second quantum circuits.

2. The method according to claim 1, wherein the first quantum circuit comprises quantum measurements in n directions, and any one of the n second quantum circuits comprises a quantum measurement in one of the n directions.

3. The method according to claim 1 or 2, wherein the splitting the first quantum circuit comprises:
splitting the first quantum circuit based on a measurement operator corresponding to the first quantum circuit.

4. The method according to claim 3, wherein the first quantum circuit corresponds to M measurement operators, and the splitting the first quantum circuit based on the measurement operator corresponding to the first quantum circuit comprises:
for a j^{th} measurement operator, adding the j^{th} measurement operator to a measurement operator set, wherein j is any value less than or equal to M;
for a k^{th} measurement operator, determining whether there is a measurement operator that has a same quantum bit as and a different direction from the k^{th} measurement operator in the measurement operator set, wherein k traverses 1 to M and k≠j; and
combining the k^{th} measurement operator with an existing measurement operator in the measurement operator set based on a determining result, or adding the k^{th} measurement operator to the measurement operator set.

5. The method according to claim 4, wherein the combining the k^{th} measurement operator with the existing measurement operator in the measurement operator set based on the determining result, or adding the k^{th} measurement operator to the measurement operator set comprises:
if there is a measurement operator that has a same quantum bit as and a different direction from the k^{th} measurement operator in the measurement operator set, adding the k^{th} measurement operator to the measurement operator set; or
if there is no measurement operator that has a same quantum bit as and/or a different direction from the k^{th} measurement operator in the measurement operator set, combining the k^{th} measurement operator with the existing measurement operator in the measurement operator set.

6. The method according to any one of claims 1 to 5, wherein the first quantum circuit comprises a quantum operation comprising a first parameter, and a specific value of the first parameter is variable.

7. The method according to claim 6, wherein the quantum operation comprising the first parameter comprises multiple quantum operations, the first quantum circuit further comprises a quantum operation comprising a second parameter, the quantum operation comprising the second parameter is obtained by using a combined operation gate, and the combined operation gate is a combined gate comprising the multiple quantum operations.

8. The method according to any one of claims 1 to 7, wherein the running result comprises n first running results or a first combined result determined based on the n first running results, and the n first running results are results obtained by running the n second quantum circuits by the second electronic device.

9. The method according to claim 8, wherein the running result comprises the n first running results, and the method further comprises:
determining the first combined result based on the n first running results and a coefficient of the measurement operator corresponding to the first quantum circuit.

10. The method according to claim 8 or 9, wherein the first quantum circuit is a quantum circuit of which the first parameter is initialized, and the method further comprises:
receiving an operation of updating the first parameter for a w^{th} time by a user, and sending, to the second electronic device, a second quantum circuit of which the first parameter is updated, wherein a value of w starts from 1;
receiving a running result that is sent by the second electronic device and that is obtained through a (w+1)^{th} time of running, wherein the running result obtained through the (w+1)^{th} time of running comprises n (w+1)^{th} running results or a (w+1)^{th} combined result, and the (w+1)^{th} combined result is obtained based on the n (w+1)^{th} running results;
determining whether the (w+1)^{th} combined result converges; and
displaying a target result and a target parameter when the (w+1)^{th} combined result converges, wherein the target result is a combined result with a smallest value in combined results, and the target parameter is a parameter corresponding to the combined result with the smallest value.

11. The method according to any one of claims 1 to 10, wherein the method further comprises:
displaying the n second quantum circuits in response to a first operation performed by the user.

12. A quantum computing method, wherein the method is applied to a second electronic device, and the method comprises:
receiving n second quantum circuits sent by a first electronic device, wherein the n quantum circuits are quantum circuits obtained by splitting a first quantum circuit;
running the n second quantum circuits to obtain n first running results; and
sending a running result to the first electronic device, wherein the running result indicates a result obtained by running the n second quantum circuits.

13. The method according to claim 12, wherein the first quantum circuit comprises quantum measurements in n directions, and any one of the n second quantum circuits comprises a quantum measurement in one of the n directions.

14. The method according to claim 12 or 13, wherein the first quantum circuit comprises a quantum operation comprising a first parameter, and a specific value of the first parameter is variable.

15. The method according to claim 14, wherein the quantum operation comprising the first parameter comprises multiple quantum operations, the first quantum circuit further comprises a quantum operation comprising a second parameter, the quantum operation comprising the second parameter is obtained by using a combined operation gate, and the combined operation gate is a combined gate comprising the multiple quantum operations.

16. The method according to any one of claims 12 to 15, wherein the running result comprises the n first running results or a first combined result, the n first running results are results obtained by running the n second quantum circuits by the second electronic device, and the first combined result is obtained based on the n first running results.

17. The method according to claim 16, wherein if the running result comprises the first combined result, the first combined result is determined based on the n first running results and a coefficient of a measurement operator corresponding to the first quantum circuit.

18. The method according to claim 16 or 17, wherein the method further comprises:
receiving a second quantum circuit that is obtained by updating the first parameter for a w^{th} time and that is sent by the first electronic device, wherein a value of w starts from 1;
running the second quantum circuit of which the first parameter is updated for the w^{th} time, to obtain n (w+1)^{th} running results; and
sending, to the first electronic device, a running result obtained through a (w+1)^{th} time of running, wherein the running result obtained through the (w+1)^{th} time of running comprises the n (w+1)^{th} running results or a (w+1)^{th} combined result, and the (w+1)^{th} combined result is obtained based on the n (w+1)^{th} running results.

19. A quantum computing apparatus, wherein the apparatus comprises a module configured to perform the method according to any one of claims 1 to 11 or 12 to 18.

20. An electronic device, comprising:
one or more processors; and
one or more memories, wherein
the one or more memories store one or more computer programs, the one or more computer programs comprise instructions, and when the instructions are executed by the one or more processors, the electronic device is caused to perform the method according to any one of claims 1 to 11 or 12 to 18.

21. A computer storage medium, comprising computer instructions, wherein when the computer instructions are run on an electronic device, the electronic device is caused to perform the method according to any one of claims 1 to 11 or 12 to 18.
